# EUROPÄISCHE PATENTANMELDUNG

(11) **EP 4 393 361 A2**
(43) Veröffentlichungstag der Anmeldung: **03.07.2024**
(21) Anmeldenummer: 24170497.2
(22) Anmeldetag: 09.01.2023
(51) Int. Cl.: A47J 43/06

(54) **KÜCHENMASCHINENANORDNUNG**

(30) Priorität: 27.04.2022 DE 102022110290
(62) Teilanmeldung aus: 23700627.5
(71) Anmelder: Wundermix GmbH, 85748 Garching b. München (DE)
(72) Erfinder: Keusgen, Adrian, 79346 Endingen am Kaiserstuhl (DE)
(74) Vertreter: Patentanwälte Bauer Vorberg Kayser

(57) **Zusammenfassung**

Die vorliegende Erfindung betrifft eine Küchenmaschinenanordnung umfassend eine Küchenmaschinenbaugruppe und eine Zerkleinerungsbaugruppe, wobei zur Bereitstellung eines Zerkleinerungs-Betriebszustandes der Küchenmaschinenanordnung zum Zerkleinern von Lebensmitteln wie Gemüse und/oder Obst, die Zerkleinerungsbaugruppe und die Küchenmaschinenbaugruppe zu einem Betriebszustands-Aufbau zusammengebaut sind.

Ferner betrifft die Erfindung eine Zerkleinerungsbaugruppe für die erwähnte Küchenmaschinenanordnung, wobei die Zerkleinerungsbaugruppe zur Bereitstellung eines Zerkleinerungs-Betriebszustandes der Küchenmaschinenanordnung zum Zerkleinern von Lebensmitteln wie Gemüse und/oder Obst, dazu ausgebildet ist, mit der Küchenmaschinenbaugruppe zu einem Betriebszustands-Aufbau zusammengebaut zu werden.

Mit der vorgeschlagenen Küchenmaschineanordnung und der Zerkleinerungsbaugruppe kann die Betriebs- und Nutzersicherheit beim Zerkleinern von Lebensmitteln verbessert werden.

## Beschreibung

Die vorliegende Erfindung betrifft eine Küchenmaschinenanordnung umfassend eine Küchenmaschinenbaugruppe und eine Zerkleinerungsbaugruppe, wobei zur Bereitstellung eines Zerkleinerungs-Betriebszustandes der Küchenmaschinenanordnung zum Zerkleinern von Lebensmitteln wie Gemüse und/oder Obst, die Zerkleinerungsbaugruppe und die Küchenmaschinenbaugruppe zu einem Betriebszustands-Aufbau zusammengebaut sind.

Ferner betrifft die Erfindung eine Zerkleinerungsbaugruppe für die erwähnte Küchenmaschinenanordnung, wobei die Zerkleinerungsbaugruppe zur Bereitstellung eines Zerkleinerungs-Betriebszustandes der Küchenmaschinenanordnung zum Zerkleinern von Lebensmitteln wie Gemüse und/oder Obst, dazu ausgebildet ist, mit der Küchenmaschinenbaugruppe zu einem Betriebszustands-Aufbau zusammengebaut zu werden.

Im vorliegenden Kontext kann eine "Küchenmaschine" auch als "Küchenmaschinenbaugruppe" bezeichnet sein.

Das Zerkleinern von Lebensmitteln wie Gemüse (z. B. Zucchini), Obst (z. B. Äpfel), aber auch Kartoffeln ist naturgemäß mit hohem Aufwand verbunden, zumindest wenn dies manuell mithilfe eines Messers oder eines anderweitig handbetätigten Zerkleinerungswerkzeugs erfolgt. Ein solches manuelles Zerkleinern von Lebensmitteln ist mit einem hohen Zeitaufwand, einer Verletzungsgefahr für den Nutzer und mit einer begrenzten Formenvielfalt (der zerkleinerten Lebensmittel) verbunden. Auch sind elektrische Küchenhelfer bekannt, mit denen Lebensmittel zerkleinert werden können, beispielsweise Kartoffeln in Scheiben geschnitten werden. Nachteilig ist bei solchen auf eine konkrete Funktionalität beschränkten elektrischen Küchenhelfern, dass zu dessen Lagerung zusätzlicher Platzbedarf in der Küche benötigt wird.

Ferner können Multifunktionsküchenmaschinen, wie beispielsweise unter der Marke Thermomix^{®} vertrieben, - nebst anderen Funktionen (z. B. Heizen, Mixen) - auch zum Zerkleinern von Lebensmitteln eingesetzt werden. Verwiesen sei diesbezüglich beispielsweise auf die Veröffentlichung EP 3 936 014 A1. Der dortige Aufbau macht sich die Rotationsfunktion eines in einem Speisenzubereitungsgefäß angeordneten Mischwerkzeugs zu eigen, um eine von dem Mischwerkzeug ausgeführte Rotationsbewegung über einen Adapter auf eine Schneidscheibe zu übertragen. Zur Zerkleinerung können Lebensmittel sodann in Kontakt mit der rotierenden Schneidscheibe gebracht werden. Bei nicht aufgesetztem Deckel, kann ein Nutzer gegebenenfalls in Berührungskontakt mit der auf den Adapter aufgesetzten Schneidscheibe kommen (auch wenn diese sich bei nicht aufgesetztem Deckel nicht rotiert). Es besteht daher ein Bedarf, bei solchen Küchenmaschinen die Sicherheit weiter zu verbessern.

Es sind zudem Küchenmaschinen bekannt, bei denen auch bei Rotation eines Zerkleinerungswerkzeugs (z. B. einer Schneidscheibe) ein direkter Kontakt eines Nutzers mit dem rotierenden Zerkleinerungswerkzeug nicht ausgeschlossen werden kann. Entsprechend besteht ein grundsätzlicher Bedarf die Betriebs- und Nutzersicherheit von zur Zerkleinerung von Lebensmitteln eingesetzten Küchenmaschinen zu verbessern.

Küchenmaschinenbaugruppen können mit entsprechenden Zerkleinerungsbaugruppen (umfassend z. B. ein Zerkleinerungswerkzeug) eine Küchenmaschinenanordnung ausbilden.

Die Aufgabe der vorliegenden Erfindung liegt einerseits darin, eine Alternative zu bekannten Küchenmaschinenanordnungen bzw. Zerkleinerungsbaugruppen dafür bereitzustellen. Andererseits liegt eine weitere Aufgabe darin, die Betriebs- und Nutzersicherheit von Küchenmaschinenanordnungen bzw. damit verwendeten Zerkleinerungsbaugruppen beim Zerkleinern von Lebensmitteln zu verbessern. Gleichsam liegt eine Aufgabe der Erfindung darin, eine Zerkleinerungsbaugruppe vorzuschlagen, die sich in unterschiedlichen Küchenmaschinenmodellen mit hoher Betriebs- und Nutzersicherheit einsetzen lässt.

Die Erfindung wird durch eine Küchenmaschinenanordnung mit den Merkmalen des Anspruchs 1 und eine Zerkleinerungsbaugruppe mit den Merkmalen des Anspruchs 23 gelöst.

Zunächst betrifft die vorliegende Erfindung eine Küchenmaschinenanordnung, umfassend eine Küchenmaschinenbaugruppe und eine Zerkleinerungsbaugruppe, wobei zur Bereitstellung eines Zerkleinerungs-Betriebszustandes der Küchenmaschinenanordnung zum Zerkleinern von Lebensmitteln wie Gemüse und/oder Obst, die Zerkleinerungsbaugruppe und die Küchenmaschinenbaugruppe zu einem Betriebszustands-Aufbau zusammengebaut sind.

Die Küchenmaschinenbaugruppe umfasst:
a. eine Antriebseinheit;
b. eine rotierbar gelagerte Rotationseinheit, die im Betriebszustands-Aufbau unter Einsatz der Antriebseinheit rotierbar ist;

Die Zerkleinerungsbaugruppe umfasst:
c. einen Sammeltopf zum Sammeln von zerkleinerten Lebensmitteln, wobei der Sammeltopf einen Sammeltopf-Innenraum aufweist, der nach außen begrenzt ist durch einen Sammeltopfboden und einen Sammeltopfmantel, wobei in dem Betriebszustands-Aufbau eine dem Sammeltopfboden gegenüberliegende Sammeltopföffnung mit einem Sammeltopfdeckel abgedeckt ist;
d. eine Adapterwelle, die im Betriebszustands-Aufbau mit einem ersten Adapterwellen-Ende an die Rotationseinheit angekoppelt ist, sodass sich eine Rotation der Rotationseinheit unmittelbar auf die Adapterwelle überträgt, wobei sich die Adapterwelle im Betriebszustands-Aufbau mit einem dem ersten Adapterwellen-Ende gegenüberliegenden zweiten Adapterwellen-Ende bis in den Sammeltopf-Innenraum hinein erstreckt,
e. eine zur Adapterwelle separate Trägerwelle, die mit einem ersten Trägerwellen-Ende in dem Sammeltopfdeckel in Bezug auf eine Trägerwellen-Längsachse axial-verschiebegesichert aufgenommen und um die Trägerwellen-Längsachse drehbar gelagert ist, wobei die Trägerwelle ein dem ersten Trägerwellen-Ende gegenüberliegendes zweites Trägerwellen-Ende aufweist, das in dem Betriebszustands-Aufbau an das zweite Adapterwellen-Ende angekoppelt ist, sodass sich eine Rotation der Rotationseinheit und der Adapterwelle unmittelbar auf die Trägerwelle überträgt;
f. ein im Betriebszustands-Aufbau von der Trägerwelle getragenes und rotationsfest zu dieser angeordnetes Zerkleinerungswerkzeug.

Der erwähnte "Betriebszustands-Aufbau" kann dabei als zusammengebauter Zustand der Küchenmaschinenbaugruppe und der Zerkleinerungsbaugruppe zu einer gemeinsamen Baueinheit verstanden werden, in dem ein Betrieb der Küchenmaschinenanordnung zum Zerkleinern von Lebensmitteln ermöglicht ist. Der Betriebszustands-Aufbau kann einen Ruhemodus (Stand-By Modus), einen ausgeschalteten Modus oder einen aktiven Betriebsmodus (in welchem eine Zerkleinerung von Lebensmitteln aktiv erfolgt) der Küchenmaschinenanordnung betreffen. Sind die Küchenmaschinenbaugruppe und die Zerkleinerungsbaugruppe nicht (zu einer gemeinsamen Baueinheit) zusammengebaut, so kann keine Zerkleinerung von Lebensmitteln mit der Küchenmaschinenanordnung erfolgen. Die nachfolgend beschriebenen Merkmale beziehen sich auf einen funktionsfähigen, zusammengebauten Betriebszustands-Aufbau der Küchenmaschinenbaugruppe und der Zerkleinerungsbaugruppe, in welchem die Zerkleinerung von Lebensmitteln bei Ausführung einer Rotation jener der Küchenmaschinenbaugruppe zugehörigen Rotationseinheit ermöglicht ist. Dabei überträgt sich die Rotation (sowie ein damit assoziiertes Drehmoment) der Rotationseinheit über die Adapterwelle und die Trägerwelle auf das Zerkleinerungswerkzeug. Bringt man ein zu zerkleinerndes Lebensmittel (ein Zerkleinerungsgut) in Kontakt mit dem rotierenden Zerkleinerungswerkzeug, so wird dieses zerkleinert. Das Zerkleinerungswerkzeug kann modular ausgebildet sein, womit unterschiedlich ausgebildete Zerkleinerungswerkzeuge, z. B. für unterschiedliche Zerkleinerungsvorgänge (z. B. Schneiden, Raspeln, Häckseln, Schälen), eingesetzt werden können.

Die Küchenmaschinenbaugruppe kann in einem nicht mit der Zerkleinerungsbaugruppe zusammengebauten Zustand für andere Zwecke verwendet werden. Vorzugsweise stellt die Küchenmaschinenbaugruppe für sich genommen eine Multifunktionsküchenmaschine bereit oder ist Bestandteil einer solchen. Die Küchenmaschinenbaugruppe kann neben der Antriebseinheit und der Rotationseinheit noch weitere Bestandteile umfassen, beispielsweise eine Steuereinheit. Die Antriebseinheit treibt die Rotationseinheit vorzugsweise über eine Antriebswelle an.

Mit einer Küchenmaschinenanordnung nach der Erfindung ist es einem Nutzer ermöglicht, Lebensmittel wie Gemüse, Obst oder Kartoffeln zu zerkleinern, insbesondere zu Schneiden, zu Raspeln, zu Häckseln, zu Hobeln, zu Schälen etc., insbesondere in geometrisch definierten Formen (z. B. stückig, nudelartig, spiralförmig, scheibenartig, streifenartig, flockenartig etc.).

In dem beschriebenen Betriebszustands-Aufbau ist das Zerkleinerungswerkzeug oberhalb des Sammeltopfbodens angeordnet, was bedeutet, dass die zerkleinerten Lebensmittel nach dem Zerkleinern durch das Zerkleinerungswerkzeug in Richtung des Sammeltopfbodens fallen und in dem Sammeltopf gesammelt werden. Nach dem Zerkleinern, die Küchenmaschinenanordnung aus der Küchenmaschinenbaugruppe und der Zerkleinerungsbaugruppe auseinandergebaut werden. Der Sammeltopf samt darin enthaltenen zerkleinerten Lebensmitteln (Zerkleinerungsgut) kann aus dem zusammengebauten Aufbau entnommen und für weitere Zwecke verwendet werden. Beispielsweise kann der Sammeltopf sodann zum Aufbewahren des Zerkleinerungsguts in einen Kühlschrank gestellt werden. Der Sammeltopf kann aus Kunststoff oder Edelstahl gebildet sein. Auch kann der Sammeltopf aus mehreren verschiedenen Materialien ausgebildet sein. An dem Sammeltopfdeckel und/oder dem Sammeltopfmantel kann ein Griff oder eine Handhabe angeordnet sein.

Wie erwähnt, umfasst die Zerkleinerungsbaugruppe eine Adapterwelle, die im Betriebszustands-Aufbau mit einem ersten Adapterwellen-Ende an die Rotationseinheit angekoppelt ist, sodass sich eine Rotation der Rotationseinheit unmittelbar auf die Adapterwelle überträgt. Die Rotationseinheit überträgt dabei ein Drehmoment auf die Adapterwelle, ist also rotationsfest (drehfest) mit dieser lösbar verbunden. Die Rotationseinheit kann ein Messer, ein Mixmesser oder ein Rührwerk sein. An der Rotationseinheit stützt sich eine im Bereich des ersten Adapterwellen-Endes ausgebildete Adaptionsschnittstelle bzw. Anlageflächen ab. Die Adapterwelle kann beispielsweise aus Edelstahl oder Kunststoff gefertigt sein.

Wie erwähnt, umfasst die Zerkleinerungsbaugruppe eine zur Adapterwelle separate Trägerwelle, die mit einem ersten Trägerwellen-Ende in dem Sammeltopfdeckel in Bezug auf eine Trägerwellen-Längsachse axial-verschiebegesichert aufgenommen und um die Trägerwellen-Längsachse drehbar gelagert ist. Auch wenn die Zerkleinerungsbaugruppe nicht mit der Küchenmaschinenbaugruppe zu einer Küchenmaschinenanordnung zusammengebaut ist, ist die Trägerwelle vorzugsweise mit einem ersten Trägerwellen-Ende in dem Sammeltopfdeckel in Bezug auf eine Trägerwellen-Längsachse axial-verschiebegesichert aufgenommen und um die Trägerwellen-Längsachse drehbar gelagert. Die Trägerwelle kann also in diesem Fall nicht ohne Gewalteinwirkung durch den Nutzer von dem Sammeltopfdeckel getrennt werden. Da das Zerkleinerungswerkzeug im Betriebszustands-Aufbau von der (mit dem Sammeltopfdeckel verbundenen) Trägerwelle getragen wird, ist eine Rotation des Zerkleinerungswerkzeugs nur möglich, wenn der Sammeltopfdeckel auf den Sammeltopfmantel aufgesetzt ist bzw. die Sammeltopföffnung abdeckt. Entsprechend wird die Gefahr, dass sich ein Nutzer an dem Zerkleinerungswerkzeug verletzt, wesentlich reduziert.

Nachfolgend seien die in den Unteransprüchen angegebenen Ausgestaltungen der Küchenmaschinenanordnung beschrieben. Diese können sowohl vorteilhafte Ausgestaltungen der Küchenmaschinenanordnung für sich genommen, jedoch auch der ebenfalls beanspruchten Zerkleinerungsbaugruppe sein. Die beschriebenen Ausgestaltungen können somit vorteilhafte Ausgestaltungen der Erfindung insgesamt sein (auch über Kategoriegrenzen hinweg). Auch seien nachfolgend Ausgestaltungen beschrieben, die nicht in den Ansprüchen angeführt sind. Auch diese Ausgestaltungen können vorteilhafte Ausgestaltungen der Erfindung sein.

Nach einer ersten Ausgestaltung der Erfindung kann vorgesehen sein, dass die Küchenmaschinenbaugruppe einen Zubereitungstopf mit einem Zubereitungstopf-Innenraum aufweist, der nach außen begrenzt ist durch einen Zubereitungstopfboden und einen Zubereitungstopfmantel, wobei in dem Betriebszustands-Aufbau eine dem Zubereitungstopfboden gegenüberliegende Zubereitungstopföffnung mit einem Zubereitungstopfdeckel abgedeckt ist, wobei der Zubereitungstopfdeckel eine Zubereitungstopf-Einfüllöffnung mit einem geringeren Durchmesser als die Zubereitungstopföffnung aufweist, und wobei die Rotationseinheit in Nähe des Zubereitungstopfbodens angeordnet ist. Vielerlei bekannter Küchenmaschinenbaugruppen (z. B. der Thermomix^{®} 5, 6, 31 des Herstellers Vorwerk und die vom Händler "Lidl" vertriebenen Küchenmaschine Monsieur Cuisine) umfassen einen solchen Zubereitungstopf. Die Zerkleinerungsbaugruppe lässt sich also Zubereitungstöpfen unterschiedlicher Hersteller kombinieren und kann funktional mit diesen zusammenwirken.

Nach einer weiteren Ausgestaltung der Erfindung kann vorgesehen sein, dass in dem Betriebszustands-Aufbau der Sammeltopf auf dem Zubereitungstopfdeckel des Zubereitungstopfes aufgesetzt ist, insbesondere derart, dass ein an einer Unterseite des Sammeltopfbodens angeordneter - vorzugsweise zylindrisch ausgebildeter - Sammeltopf-Kragen auf dem Zubereitungstopfdeckel aufliegt, und/oder dass die Unterseite des Sammeltopfbodens auf einem an dem Zubereitungstopfdeckel angeordneten - vorzugsweise zylindrisch ausgebildeten - Zubereitungstopfdeckel-Kragen aufliegt. Der zylindrisch ausgebildete Sammeltopf-Kragen und/oder der zylindrisch ausgebildete Zubereitungstopfdeckel-Kragen können eine umlaufend durchgängige Zylinderform aufweisen oder Material-Durchbrechungen aufweisen, sich also aus einer Mehrzahl die jeweiligen Kragen ausbildenden Stegen zusammensetzen. Der Sammeltopf-Kragen kann einen Standfuß des Sammeltopfes ausbilden. Es kann vorgesehen sein, dass sich der Sammeltopf-Kragen zumindest teilweise an dem Zubereitungstopfdeckel-Kragen abstützt oder umgekehrt und somit eine Verschiebesicherung des Sammeltopfs gegenüber dem Zubereitungstopf in Radialrichtung ausbildet. Die Abstützung wird dabei durch entsprechende Mantelflächen der jeweiligen Kragen bereitgestellt. Das Aufsetzen des Sammeltopfes auf den Zubereitungstopf ermöglicht eine besonders einfache Assemblierung (Verbindung) des Sammeltopfes mit dem Zubereitungstopf.

Nach einer weiteren Ausgestaltung der Erfindung kann vorgesehen sein, dass in dem Sammeltopfboden eine Adapterwellen-Durchführöffnung ausgebildet ist, durch welche die Adapterwelle in dem Betriebszustands-Aufbau hindurchgeführt ist, wobei die Adapterwellen-Durchführöffnung in dem Betriebszustands-Aufbau in Radialrichtung zentrisch zur Zubereitungstopf-Einfüllöffnung angeordnet ist, und wobei die Adapterwellen-Durchführöffnung einen geringeren Durchmesser als die Zubereitungstopf-Einfüllöffnung aufweist. Die Adapterwellen-Durchführöffnung ist vorzugsweise eine Lochöffnung, die eine beliebige Konturgeometrie (Lochgeometrie) aufweisen kann, beispielsweise kann die Adapterwellen-Durchführöffnung eine Lochöffnung mit zylindrischen oder polygonalen Lochgeometrie sein. Vorzugsweise entspricht der Durchmesser der Adapterwellen-Durchführöffnung im Wesentlichen einem Außendurchmesser der im Betriebszustands-Aufbau durch die Adapterwellen-Durchführöffnung hindurchgeführten Adapterwelle. Ist die Adapterwelle entlang ihrer Längsachse verjüngend ausgebildet, weist die Adapterwellen-Durchführöffnung einen Durchmesser auf, der zumindest dem größten Außendurchmesser eines jenen im Betriebszustands-Aufbau durch die Adapterwellen-Durchführöffnung hindurchgeführten Längsabschnitts der Adapterwelle entspricht oder größer als dieser ist. Die Adapterwellen-Durchführöffnung und die Adapterwelle sind vorzugsweise so konstruiert, dass sich in dem Sammeltopf sammelndes Zerkleinerungsgut nicht in den Zubereitungstopf gelangt. Dieser muss also nach dem Zerkleinern nicht gesondert gereinigt werden.

Nach einer weiteren Ausgestaltung der Erfindung kann vorgesehen sein, dass sich die Adapterwelle im Betriebszustands-Aufbau ausgehend von dem an die Rotationseinheit angekoppelten ersten Adapterwellen-Ende durch den Zubereitungstopf-Innenraum und die Adapterwellen-Durchführöffnung bis hinein in den Sammeltopf-Innenraum erstreckt, wobei das zweite Adapterwellen-Ende in dem Sammeltopf-Innenraum endet. In Bezug auf den Gesamtaufbau der Küchenmaschinenanordnung ist die Adapterwelle somit vorzugsweise zentriert angeordnet und positioniert.

Nach einer weiteren Ausgestaltung der Erfindung kann vorgesehen sein, dass an der Unterseite des Sammeltopfbodens - in Radialrichtung zwischen der Adapterwellen-Durchführöffnung und einer äußeren Umlaufkante des Sammeltopfbodens - ein Befestigungskragen ausgebildet ist, der sich ausgehend von der Unterseite des Sammeltopfbodens zylindrisch von der Unterseite des Sammeltopfbodens weg erstreckt. Der Befestigungskragen kann eine durchgängige Zylinderform aufweisen oder Material-Durchbrechungen aufweisen, sich also aus einer Mehrzahl den Befestigungskragen ausbildenden Befestigungsstegen zusammensetzen, die beabstandet zueinander im Kreis aufgereiht sind. Die Befestigungsstege bilden dann eine zylinderförmige Aneinanderreihung von Befestigungsstegen, wobei die Befestigungsstege einander nicht berühren.

Nach einer weiteren Ausgestaltung der Erfindung kann vorgesehen sein, dass der Befestigungskragen derart ausgebildet und dimensioniert ist, dass dieser in dem Betriebszustands-Aufbau in die Zubereitungstopf-Einfüllöffnung eingreift, wobei an dem Befestigungskragen Befestigungsmittel angeordnet sind, die bei Eingriff des Befestigungskragens in die Zubereitungstopf-Einfüllöffnung eine Sicherung gegen eine Axialverschiebung des Sammeltopfes relativ zum Zubereitungstopf bereitstellen. Dadurch wird ein ungewünschtes Lösen oder Wegschnellen des Sammeltopfes von dem Zubereitungstopf beim Zerkleinern der Lebensmittel verhindert, was wesentlich zur Nutzer- und Betriebssicherheit beiträgt. Als solcher stellt der Befestigungskragen bei Eingriff in die Zubereitungstopf-Einfüllöffnung zudem eine Verschiebesicherung des Sammeltopfes in Radialrichtung bereit, nämlich in Bezug zu dem Zubereitungstopf. Somit ist ein Verschieben oder Lösen des Sammeltopfes relativ zum Zubereitungstopf auch in Radialrichtung verhindert.

Nach einer weiteren Ausgestaltung der Erfindung kann vorgesehen sein, dass die Befestigungsmittel mehrere an dem Befestigungskragen ausgebildete Rastnasen sind, die bei Eingriff des Befestigungskragens in die Zubereitungstopf-Einfüllöffnung mit dem Zubereitungstopfdeckel verrasten, und/oder wobei die Befestigungsmittel Mittel zur Bereitstellung von Bajonette-Verschlussverbindungen sind, die bei Eingriff des Befestigungskragens in die Zubereitungstopf-Einfüllöffnung mit dem Zubereitungstopfdeckel Bajonette-Verschlussverbindungen bilden. An einem oder mehreren der erwähnten Befestigungsstege kann ein entsprechendes Befestigungsmittel (Rastnase oder Mittel zur Bereitstellung von Bajonette-Verschlussverbindungen) ausgebildet sein. Auch können diese Befestigungsmittel an einem in durchgängiger Zylinderform ausgebildeten Befestigungskragen ausgebildet sein. Die Befestigungsmittel ermöglichen eine Axial- und/oder Radialsicherung des Sammeltopfes gegenüber dem Zubereitungstopf.

Nach einer weiteren Ausgestaltung der Erfindung kann vorgesehen sein, dass an dem zweiten Adapterwellen-Ende in einem Konturabschnitt eine polygonale, insbesondere hexagonale, Außenkontur ausgebildet ist. Nach einer weiteren Ausgestaltung der Erfindung kann vorgesehen sein, dass die Trägerwelle eine Trägerhülse umfasst, die an einem ersten Trägerhülsen-Ende eine erste Hülsenaufnahme aufweist, die das zweite Trägerwellen-Ende bildet und eine polygonale, insbesondere hexagonale, Innenkontur aufweist. Nach einer Ausgestaltung der Erfindung kann vorgesehen sein, dass in dem Betriebszustands-Aufbau der Konturabschnitt zumindest teilweise in die erste Hülsenaufnahme eingreift und mit dieser eine kraft- und/oder formschlüssige Verbindung bildet, wobei die Außenkontur des Konturabschnitts zu der Innenkontur der ersten Hülsenaufnahme korrespondiert. Im Falle des Zusammenwirkens einer polygonalen Außen- und Innenkontur kann eine Formschlussverbindung bereitgestellt werden, die vorteilhaft für eine effiziente und sichere Drehmomentübertragung von der Adapterwelle auf die Trägerwelle ist.

Nach einer weiteren Ausgestaltung der Erfindung kann vorgesehen sein, dass die Adapterwelle zumindest im Bereich des Konturabschnitts in Richtung des zweiten Adapterwellen-Endes verjüngend ausgebildet ist. Sofern die erste Hülsenaufnahme keine verjüngende Form aufweist, sondern einen konstanten Durchmesser, kann bei Eingriff des Konturabschnitts in die erste Hülsenaufnahme eine Kraftschlussverbindung zwischen Konturabschnitt und erster Hülsenaufnahme bereitgestellt werden, die ein Lösen der Trägerwelle von der Adapterwelle in Axialrichtung erschwert und somit zur Betriebs- und Nutzersicherheit wesentlich beiträgt. Die Kraftschlussverbindung kann durch Aufstecken der ersten Hülsenaufnahme auf den Konturabschnitt oder durch Einstecken des Konturabschnitts in die erste Hülsenaufnahme erfolgen. Auch wirkt ein solcher Kraftschluss in einem gewissen Maß einem Verdrehen zwischen Adapterwelle und Trägerwelle bei deren Rotation entgegen, trägt also zu einer rotationsfesten Verbindung der Adapterwelle und Trägerwelle bei.

Nach einer weiteren Ausgestaltung der Erfindung kann vorgesehen sein, dass die Trägerhülse im Bereich des ersten Trägerhülsen-Endes einen angeschrägten Auflaufabschnitt aufweist, der ein erleichtertes Ankoppeln des zweiten Trägerwellen-Endes an das zweite Adapterwellen-Ende ermöglicht. Insbesondere ermöglicht der Auflaufabschnitt ein erleichtertes Hineingleiten oder Einführen des Konturabschnitts in die erste Hülsenaufnahme. Der angeschrägte Auflaufabschnitt erweitert sich also konisch in Richtung des Konturabschnitts und erleichtert die Positionierung beider Komponenten auch bei initialer Schrägstellung. Zu einem gewissen Maß ermöglicht der Auflaufabschnitt also eine Selbstausrichtung zwischen Konturabschnitt und erster Hülsenaufnahme.

Nach einer weiteren Ausgestaltung der Erfindung kann vorgesehen sein, dass die Trägerhülse an einem dem ersten Trägerhülsen-Ende gegenüberliegenden zweiten Trägerhülsen-Ende eine zweite Hülsenaufnahme aufweist, in die ein Lagerbolzen mit einem ersten Lagerbolzenende kraft-, form- und/oder stoffschlüssig eingesetzt, insbesondere eingepresst, ist, wobei der Lagerbolzen mit einem dem ersten Lagerbolzenende gegenüberliegenden zweiten Lagerbolzenende in einer in dem Sammeltopfdeckel ausgebildeten Lageraufnahme in Bezug auf eine Lagerbolzen-Längsachse, die einen Teil der Trägerwellen-Längsachse bildet, axial-verschiebegesichert aufgenommen und um die Lagerbolzen-Längsachse bzw. die Trägerwellen-Längsachse drehbar gelagert ist. Der Lagerbolzen sowie die damit verbundene Trägerhülse lassen vorzugsweise nicht ohne Weiteres (also ohne Gewalteinwirkung) vom Sammeltopfdeckel lösen. Der Lagerbolzen kann aus Metall (z. B. Edelstahl) oder Kunststoff gefertigt sein. Gleiches gilt für die Trägerhülse.

Nach einer weiteren Ausgestaltung der Erfindung kann vorgesehen sein, dass das Zerkleinerungswerkzeug eine Schneidscheibe ist, die mit einer zentriert durch die Schneidscheibe hindurchragenden Schneidscheiben-Trägerhülse rotationsfest verbunden ist, wobei die Schneidscheiben-Trägerhülse im Betriebszustands-Aufbau lösbar auf die Trägerhülse aufgeschoben und durch an der Trägerhülse angeordnete Rastmittel in Bezug auf die Trägerwellen-Längsachse axial-verschiebegesichert ist, und wobei die Schneidscheiben-Trägerhülse im auf die Trägerhülse aufgeschobenen Zustand rotationsfest mit dieser verbunden ist. Die Schneidscheiben-Trägerhülse kann eine polygonale (z. B. hexagonale) Innenkontur aufweisen, während die Trägerhülse eine polygonale (z. B. hexagonale) Außenkontur aufweisen kann. Entsprechend kann bei auf die Trägerhülse aufgeschobener Schneidscheiben-Trägerhülse eine Formschlussverbindung (zwischen den polygonalen Konturen) die rotationsfeste Verbindung zwischen Schneidscheiben-Trägerhülse und Trägerhülse bereitstellen. Lösbare Verbindung zwischen Schneidscheiben-Trägerhülse und Trägerhülse meint in diesem Zusammenhang, dass die Schneidscheiben-Trägerhülse samt Schneidscheibe im nicht montierten (zusammengebauten) Zustand der Zerkleinerungsbaugruppe von der Trägerhülse gelöst werden kann, gleichwohl bei Benutzung im Betriebszustands-Aufbau in Axialrichtung verschiebegesichert ist. Auch ist vorzugsweise eine rotationsfeste Verbindung zwischen Trägerhülse und darauf aufgeschobener Schneidscheiben-Trägerhülse gewährleistet, was neben dem beschriebenen Zusammenwirken der polygonalen Konturen beispielsweise auch durch eine kraftschlüssige Verbindung (z. B. einen Presssitz) zwischen Schneidscheiben-Trägerhülse und Trägerhülse oder die erwähnten Rastmittel. Die Schneidscheibe weist vorzugsweise zumindest eine Schneidkante und zumindest eine entsprechende Schneidöffnung auf, durch welche das zerkleinerte Lebensmittel durch die Schneidscheibe hindurch in Richtung des Sammeltopfes fallen kann.

Nach einer weiteren Ausgestaltung der Erfindung kann vorgesehen sein, dass der Sammeltopfdeckel einen Einfüllstutzen aufweist, über den zu zerkleinernde Lebensmittel unter Einsatz eines in den Einfüllstutzen einsteckbaren Stößels in Richtung der Schneidscheibe gedrückt (bewegt) werden können. Der Einfüllstutzen erstreckt sich von einer nach Sammeltopf-außen weisenden Oberfläche des Sammeltopfdeckels weg und bildet einen Einfüllkanal, der in den Sammeltopf-Innenraum mündet. Der Stößel wird dabei in der Regel von einem Nutzer händisch benutzt, um die Lebensmittel in Richtung der Schneidscheibe zu drücken bzw. Lebensmittel nachzuführen. Durch die kombinierte Nutzung von Einfüllstutzen und Stößel wird das Verletzungsrisiko für den Nutzer in Bezug auf eine Verletzung an dem rotierenden Zerkleinerungswerkzeug weiter verringert.

Nach einer weiteren Ausgestaltung der Erfindung kann vorgesehen sein, dass der Sammeltopfmantel an seiner dem Sammeltopf-Innenraum zugewandten Innenmantelfläche einen oder mehrere sich zumindest teilweise in einer Richtung vom Sammeltopfboden bis zur Sammeltopföffnung erstreckende(n) und in den Sammeltopf-Innenraum hineinragenden Steg(e) aufweist, wobei der/die Steg(e) ein ungewünschtes Aufsetzen der mit der Schneidscheibe verbundenen Schneidscheiben-Trägerhülse auf das zweite Adapterwellen-Ende verhindert. Der Steg/die Stege verringern den Innendurchmesser im Sammeltopf-Innenraum derart, dass sich eine Schneidscheibe mit in Bezug zu dem durch die Stege festgelegten Innendurchmesser des Sammeltopf-Innenraums größerem Außendurchmesser nicht auf das zweite Adapterwellen-Ende aufsetzen und betreiben lässt. Dies wirkt sich positiv auf die Sicherheit eines Nutzers der Küchenmaschinenanordnung aus.

Nach einer weiteren Ausgestaltung der Erfindung kann vorgesehen sein, dass die Trägerhülse an einem dem ersten Trägerhülsen-Ende gegenüberliegenden zweiten Trägerhülsen-Ende einen umlaufende Lagerkante aufweist, die in einem in dem Sammeltopfdeckel ausgebildeten Lagerschlitz in Bezug auf die Trägerwellen-Längsachse axial-verschiebegesichert aufgenommen und um die Trägerwellen-Längsachse drehbar gelagert ist. Diese Ausgestaltung stellt einerseits eine in Bezug auf eine Axialverschiebung sichere Lagerung der Trägerhülse (und somit auch des Zerkleinerungswerkzeugs) in dem Sammeltopfdeckel sicher, andererseits ist eine Rotation der Trägerhülse gegenüber dem im Betrieb positionsfesten Sammeltopfdeckel erlaubt.

Nach einer weiteren Ausgestaltung der Erfindung kann vorgesehen sein, dass die Trägerhülse ausgehend von der Lagerkante einen sich in Richtung des ersten Trägerhülsen-Endes trichterartig verjüngenden Trichterabschnitt aufweist, wobei an einem unteren Ende des Trichterabschnitts ein Aufnahmeschlitz für ein Zerkleinerungswerkzeug ausgebildet ist, und wobei in dem Betriebszustands-Aufbau ein Zerkleinerungswerkzeug in den Aufnahmeschlitz eingeschoben ist. In den Aufnahmeschlitz können unterschiedliche Zerkleinerungswerkzeuge schlittenartig eingeschoben werden. Es können Mittel zur Sicherung einer positions- und drehfesten Anordnung des Zerkleinerungswerkzeugs in Bezug zum Trichterabschnitt der Trägerhülse im Bereich des Aufnahmeschlitzes und/oder an dem Zerkleinerungswerkzeug vorgesehen sein. Insbesondere handelt es sich bei dieser Ausgestaltung um eine Variante der Zerkleinerungsbaugruppe mit der sich Gemüse, Obst und/oder Kartoffeln spiralförmig oder nudelartig zerkleinern (schneiden) lässt. Nach einer weiteren Ausgestaltung der Erfindung kann auch bei dieser Variante vorgesehen sein, dass der Sammeltopfdeckel einen Einfüllstutzen aufweist. Dieser ist im Betriebszustands-Aufbau in Fluchtung zu dem Trichterabschnitt angeordnet. Über den Einfüllstutzen lassen sich im Betriebszustands-Aufbau, zu zerkleinernde Lebensmittel unter Einsatz eines in den Einfüllstutzen einsteckbaren Stößels in Richtung des Trichterabschnitts und des Zerkleinerungswerkzeugs drücken.

Nach einer weiteren Ausgestaltung der Erfindung kann vorgesehen sein, dass an einer Außenmantelfläche des Sammeltopfmantels eine Verdrehsicherung angeordnet ist, die einen Stützflansch aufweist, der sich im Betriebszustands-Aufbau an einer an dem Zubereitungstopfdeckel angeordnete Lasche und/oder einem Griff abstützt. Damit kann eine Verdrehsicherung des Sammeltopfes gegenüber dem Zubereitungstopf bzw. Zubereitungstopfdeckel bereitgestellt werden. Auch kann der Stützflansch so ausgebildet sein, dass sich dieser an einem Griff oder einer anderweitigen Komponente des Zubereitungstopfes zur Bereitstellung einer Verdrehsicherung abstützt.

Nach einer weiteren Ausgestaltung der Erfindung kann vorgesehen sein, dass an dem Stützflansch ein oder mehrere Nocken angeordnet sind, der/die im Betriebszustands-Aufbau eine an dem Zubereitungstopfdeckel angeordnete Lasche und/oder eine Griff untergreifen oder hintergreifen. Damit kann die besagte Verdrehsicherung weiter verbessert und/oder zusätzlich eine axiale Verschiebesicherung/Verkippsicherung/Radialsicherung zwischen Sammeltopf und Zubereitungstopf bereitgestellt werden.

Vorzugsweise ist der Stützflansch derart ausgebildet, dass die Zerkleinerungsbaugruppe in Verbindung mit den Zubereitungstöpfen unterschiedlicher Küchenmaschinenmodelle verwendet werden kann und gleichzeitig eine Verdrehsicherung gegenüber den jeweiligen Zubereitungstöpfen bereitgestellt ist. Gleiches gilt für den/die an dem Stützflansch angeordneten Nocken in Bezug auf die besagte axiale Verschiebesicherung/Verkippsicherung/Radialsicherung.

Vorzugsweise ist das Zerkleinerungswerkzeug aus Metall gefertigt.

Weiterhin betrifft die Erfindung eine Zerkleinerungsbaugruppe für eine nach der Erfindung ausgebildete Küchenmaschinenanordnung, wobei die Zerkleinerungsbaugruppe zur Bereitstellung eines Zerkleinerungs-Betriebszustandes der Küchenmaschinenanordnung zum Zerkleinern von Lebensmitteln wie Gemüse und/oder Obst, dazu ausgebildet ist, mit der Küchenmaschinenbaugruppe zu einem Betriebszustands-Aufbau zusammengebaut zu werden.

Die Zerkleinerungsbaugruppe umfasst:
a. einen Sammeltopf zum Sammeln von zerkleinerten Lebensmitteln, wobei der Sammeltopf einen Sammeltopfboden, einen Sammeltopfmantel und einen Sammeltopfdeckel umfasst, wobei der Sammeltopf einen Sammeltopf-Innenraum aufweist, der nach außen begrenzt ist durch den Sammeltopfboden und den Sammeltopfmantel, wobei eine dem Sammeltopfboden gegenüberliegende Sammeltopföffnung mit einem Sammeltopfdeckel abdeckbar ist;
b. eine Adapterwelle, die mit einem ersten Adapterwellen-Ende an eine Rotationseinheit der Küchenmaschinenbaugruppe ankoppelbar ist, sodass eine durch eine Antriebseinheit der Küchenmaschinenbraugruppe bewirkte Rotation der Rotationseinheit unmittelbar auf die Adapterwelle übertragbar ist, wobei die Adapterwelle dazu ausgebildet ist, dass sich die Adapterwelle in dem Betriebszustands-Aufbau mit einem dem ersten Adapterwellen-Ende gegenüberliegenden zweiten Adapterwellen-Ende bis in den Sammeltopf-Innenraum hinein erstreckt,
c. eine zur Adapterwelle separate Trägerwelle, die mit einem ersten Trägerwellen-Ende in dem Sammeltopfdeckel in Bezug auf eine Trägerwellen-Längsachse axial-verschiebegesichert aufgenommen und um die Trägerwellen-Längsachse drehbar gelagert ist, wobei die Trägerwelle ein dem ersten Trägerwellen-Ende gegenüberliegendes zweites Trägerwellen-Ende aufweist, mit dem die Trägerwelle an das zweite Adapterwellen-Ende ankoppelbar ist, sodass eine Rotation der Rotationseinheit und der Adapterwelle unmittelbar auf die Trägerwelle übertragbar ist;
d. ein von der Trägerwelle tragbares und rotationsfest zu dieser anordenbares Zerkleinerungswerkzeug.

Die Zerkleinerungsbaugruppe ist in einer besonders vorteilhaften Ausführungsvariante kompatibel zu den Küchenmaschinen Thermomix^{®} 5, 6, 31 des Herstellers Vorwerk und der vom Händler "Lidl" vertriebenen Küchenmaschine Monsieur Cuisine.

Um Wiederholungen zu vermeiden, seien die vorstehend im Zusammenhang der Beschreibung der Küchenmaschinenanordnung in Bezug zur Zerkleinerungsbaugruppe beschriebenen Merkmale an dieser Stelle nicht nochmals wiederholt. Sind bestimmte Merkmale der Zerkleinerungsbaugruppe im Kontext der Beschreibung der Küchenmaschinenanordnung aktiv formuliert/bezeichnet (z. B. "ist angeordnet"; "rotiert"), so ist dem Fachmann klar, dass ein solches Merkmal im Kontext der Zerkleinerungsbaugruppe für sich genommen auch passiv (funktional) formuliert/bezeichnet werden kann (z. B. "ist anordenbar"; "rotierbar").

Weitere Ausgestaltungen der Erfindung sind in den nachfolgend beschriebenen Figuren gezeigt. Dort zeigen:
- Fig. 1: eine teils geschnittene schematische Seitenansicht einer Küchenmaschinenanordnung nach einem ersten Ausführungsbeispiel der Erfindung, bei der eine Küchenmaschinenbaugruppe und eine Zerkleinerungsbaugruppe zu einem Betriebszustands-Aufbau zusammengebaut sind;
- Fig. 2: eine perspektivische Explosionsdarstellung einer Küchenmaschinenanordnung nach dem ersten Ausführungsbeispiel der Erfindung;
- Fig. 3: eine perspektivische Explosionsdarstellung einer Zerkleinerungsbaugruppe für eine Küchenmaschinenanordnung nach einem zweiten Ausführungsbeispiel der Erfindung;
- Fig. 4: die Zerkleinerungsbaugruppe nach Fig. 3 in teils geschnittener schematischer Seitenansicht;
- Fig. 5: die Zerkleinerungsbaugruppe nach Fig. 3 in Seitenansicht;
- Fig. 6: eine Explosionsdarstellung die Küchenmaschinenanordnung nach dem zweiten Ausführungsbeispiel der Erfindung;
- Fig. 7a: eine Ansicht eines Sammeltopfdeckels einer Zerkleinerungsbaugruppe, die Bestandteil einer Küchenmaschinenanordnung nach dem zweiten Ausführungsbeispiel der Erfindung ist;
- Fig. 7b: eine Ansicht eines Sammeltopfes einer Zerkleinerungsbaugruppe, die Bestandteil einer Küchenmaschinenanordnung nach dem ersten und zweiten Ausführungsbeispiel der Erfindung ist;
- Fig. 7c: eine Ansicht einer Adapterwelle einer Zerkleinerungsbaugruppe, die Bestandteil einer Küchenmaschinenanordnung nach dem ersten und zweiten Ausführungsbeispiel der Erfindung ist;
- Fig. 7d, e: Ansichten von in Form von Schneidscheiben ausgebildeten Zerkleinerungswerkzeugen einer Zerkleinerungsbaugruppe, die Bestandteil einer Küchenmaschinenanordnung nach dem zweiten Ausführungsbeispiel der Erfindung ist;
- Fig. 7f: eine Ansicht eines Stößels einer Zerkleinerungsbaugruppe, die Bestandteil einer Küchenmaschinenanordnung nach dem ersten und zweiten Ausführungsbeispiel der Erfindung ist;
- Fig. 8a: eine perspektivische Ansicht eines Sammeltopfes einer Zerkleinerungsbaugruppe, die Bestandteil einer Küchenmaschinenanordnung nach dem ersten und zweiten Ausführungsbeispiel der Erfindung ist;
- Fig. 8b: eine perspektivische Ansicht des Sammeltopfes nach Figur 8a von seiner Unterseite samt den daran angeordneten Befestigungskragen;
- Fig. 9: eine Ansicht einer alternativen Ausgestaltung des in Figur 8b gezeigten Befestigungskragens;
- Fig. 10: eine perspektivische Ansicht des Einsetzens der Adapterwelle in einen Zubereitungstopf bei einer Küchenmaschinenanordnung nach dem ersten und zweiten Ausführungsbeispiel der Erfindung;
- Fig. 11: eine perspektivische Ansicht des Aufsetzens des Sammeltopfes auf den Zubereitungstopf bei einer Küchenmaschinenanordnung nach dem ersten und zweiten Ausführungsbeispiel der Erfindung;
- Fig. 12: eine perspektivische Ansicht einer Anordnung aus Zubereitungstopf, eingesetzter Adapterwelle, auf den Zubereitungstopf aufgesetztem Sammeltopf, und Sammeltopfdeckel bei einer Küchenmaschinenanordnung nach dem zweiten Ausführungsbeispiel der Erfindung;
- Fig. 13a: Sammeltopfdeckel und Zerkleinerungswerkzeug einer Zerkleinerungsbaugruppe, die Bestandteil einer Küchenmaschinenanordnung nach dem zweiten Ausführungsbeispiel der Erfindung ist;
- Fig. 13b: Sammeltopfdeckel und Zerkleinerungswerkzeug aus Fig. 13a im zusammengebauten Zustand;
- Fig. 14a: eine perspektivische Ansicht einer Küchenmaschinenanordnung nach dem zweiten Ausführungsbeispiel der Erfindung;
- Fig. 14b: eine perspektivische Ansicht der Küchenmaschinenanordnung aus Fig. 14a samt Stößel;
- Fig. 15a: eine perspektivische Ansicht einer Küchenmaschinenanordnung nach dem zweiten Ausführungsbeispiel der Erfindung;
- Fig. 15b: eine Seitenansicht der Küchenmaschinenanordnung Fig. 15a;
- Fig. 15c: eine vergrößerte Darstellung einer Einzelheit aus Fig. 15b;
- Fig. 16a: eine Aufsichtsdarstellung einer Küchenmaschinenanordnung nach dem zweiten Ausführungsbeispiel der Erfindung;
- Fig. 16b: eine vergrößerte Darstellung einer Einzelheit aus Fig. 16a;
- Fig. 17a: eine perspektivische Ansicht einer Küchenmaschinenanordnung nach dem zweiten Ausführungsbeispiel der Erfindung;
- Fig. 17b: eine vergrößerte Darstellung einer Einzelheit aus Fig. 17a;
- Fig. 18a: eine Seitenansicht einer Küchenmaschinenanordnung nach dem zweiten Ausführungsbeispiel der Erfindung;
- Fig. 18b: eine vergrößerte Darstellung einer Einzelheit aus Fig. 18a.

Funktional gleich- oder ähnlich- wirkende Komponenten seien (auch über einzelne Ausführungsbeispiele hinweg) mit gleichen Bezugszeichen versehen.

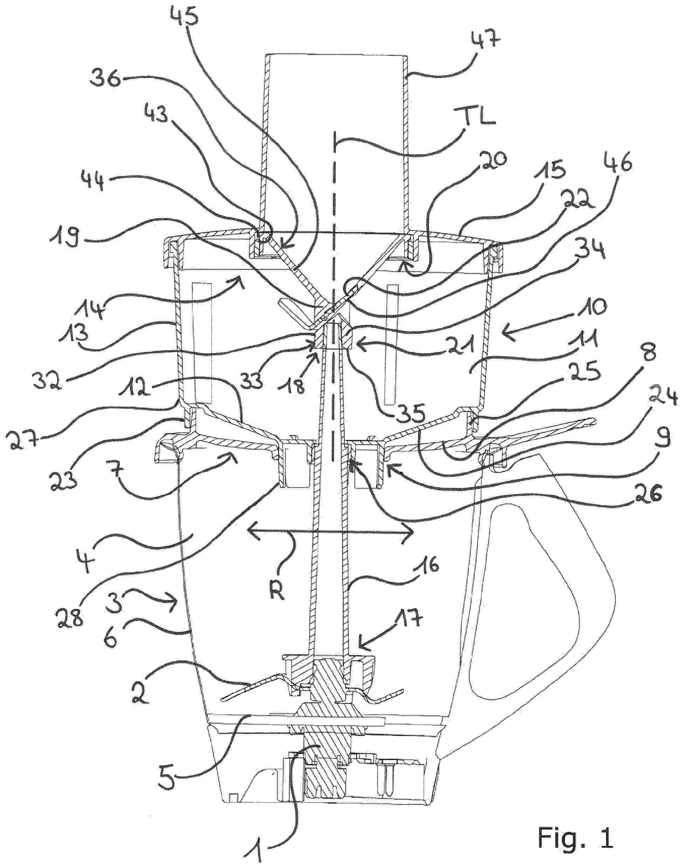

Figur 1 zeigt eine teils geschnittene schematische Seitenansicht einer Küchenmaschinenanordnung nach einem ersten Ausführungsbeispiel der Erfindung, bei der eine Küchenmaschinenbaugruppe und eine Zerkleinerungsbaugruppe zu einem Betriebszustands-Aufbau zusammengebaut sind. Die Küchenmaschinenanordnung umfasst also eine Küchenmaschinenbaugruppe und eine Zerkleinerungsbaugruppe, wobei zur Bereitstellung eines Zerkleinerungs-Betriebszustandes der Küchenmaschinenanordnung zum Zerkleinern von Lebensmitteln wie Gemüse und/oder Obst, die Zerkleinerungsbaugruppe und die Küchenmaschinenbaugruppe zu einem Betriebszustands-Aufbau (wie z. B. in Fig. 1 gezeigt) zusammengebaut sind.

Die Küchenmaschinenbaugruppe umfasst eine Antriebseinheit 1 und eine rotierbar gelagerte Rotationseinheit 2, die im Betriebszustands-Aufbau unter Einsatz der Antriebseinheit 1 rotierbar ist. Ferner umfasst die Küchenmaschinenbaugruppe einen Zubereitungstopf 3, der einen Zubereitungstopf-Innenraum 4 aufweist, der nach außen begrenzt ist durch einen Zubereitungstopfboden 5 und einen Zubereitungstopfmantel 6, wobei in dem Betriebszustands-Aufbau eine dem Zubereitungstopfboden 5 gegenüberliegende Zubereitungstopföffnung 7 mit einem Zubereitungstopfdeckel 8 abgedeckt ist, wobei der Zubereitungstopfdeckel 8 eine Zubereitungstopf-Einfüllöffnung 9 mit einem geringeren Durchmesser als die Zubereitungstopföffnung 7 aufweist, und wobei die Rotationseinheit 2 in Nähe des Zubereitungstopfbodens 5 angeordnet ist.

Die Zerkleinerungsbaugruppe umfasst einen Sammeltopf 10 zum Sammeln von zerkleinerten Lebensmitteln, wobei der Sammeltopf 10 einen Sammeltopf-Innenraum 11 aufweist, der nach außen begrenzt ist durch einen Sammeltopfboden 12 und einen Sammeltopfmantel 13, wobei in dem Betriebszustands-Aufbau eine dem Sammeltopfboden 12 gegenüberliegende Sammeltopföffnung 14 mit einem Sammeltopfdeckel 15 abgedeckt ist.

Ferner umfasst die Zerkleinerungsbaugruppe eine Adapterwelle 16, die im Betriebszustands-Aufbau mit einem ersten Adapterwellen-Ende 17 an die Rotationseinheit 2 angekoppelt ist, sodass sich eine Rotation der Rotationseinheit 2 unmittelbar auf die Adapterwelle 16 überträgt, wobei sich die Adapterwelle 16 im Betriebszustands-Aufbau mit einem dem ersten Adapterwellen-Ende 17 gegenüberliegenden zweiten Adapterwellen-Ende 18 bis in den Sammeltopf-Innenraum 11 hinein erstreckt.

Ferner umfasst die Zerkleinerungsbaugruppe eine zur Adapterwelle 16 separate Trägerwelle 19, die mit einem ersten Trägerwellen-Ende 20 in dem Sammeltopfdeckel 15 in Bezug auf eine Trägerwellen-Längsachse TL axial-verschiebegesichert aufgenommen und um die Trägerwellen-Längsachse TL drehbar gelagert ist, wobei die Trägerwelle 19 ein dem ersten Trägerwellen-Ende 20 gegenüberliegendes zweites Trägerwellen-Ende 21 aufweist, das in dem Betriebszustands-Aufbau an das zweite Adapterwellen-Ende 18 angekoppelt ist, sodass sich eine Rotation der Rotationseinheit 2 und der Adapterwelle 16 unmittelbar auf die Trägerwelle 19 überträgt.

Weiterhin umfasst die Zerkleinerungsbaugruppe ein im Betriebszustands-Aufbau von der Trägerwelle 19 getragenes und rotationsfest zu dieser angeordnetes Zerkleinerungswerkzeug 22.

Wie zum Beispiel in Figur 1 gezeigt, ist in dem Betriebszustands-Aufbau der Sammeltopf 10 auf dem Zubereitungstopfdeckel 8 des Zubereitungstopfes 3 aufgesetzt. An einer Unterseite 24 des Sammeltopfbodens 12 ist zylindrisch ausgebildeter Sammeltopf-Kragen 23 ausgebildet. Die Unterseite 24 des Sammeltopfbodens 12 liegt auf einem an dem Zubereitungstopfdeckel 8 angeordneten zylindrisch ausgebildeten Zubereitungstopfdeckel-Kragen 25 auf.

In dem Sammeltopfboden 12 ist eine Adapterwellen-Durchführöffnung 26 ausgebildet, durch welche die Adapterwelle 16 in dem Betriebszustands-Aufbau hindurchgeführt ist, wobei die Adapterwellen-Durchführöffnung 26 in dem Betriebszustands-Aufbau in Radialrichtung R zentrisch zur Zubereitungstopf-Einfüllöffnung 9 angeordnet ist, und wobei die Adapterwellen-Durchführöffnung 26 einen geringeren Durchmesser als die Zubereitungstopf-Einfüllöffnung 9 aufweist. Die Adapterwelle 16 erstreckt sich im Betriebszustands-Aufbau ausgehend von dem an die Rotationseinheit 2 angekoppelten ersten Adapterwellen-Ende 17 durch den Zubereitungstopf-Innenraum 4 und die Adapterwellen-Durchführöffnung 26 bis hinein in den Sammeltopf-Innenraum 11, wobei das zweite Adapterwellen-Ende 18 in dem Sammeltopf-Innenraum 11 endet.

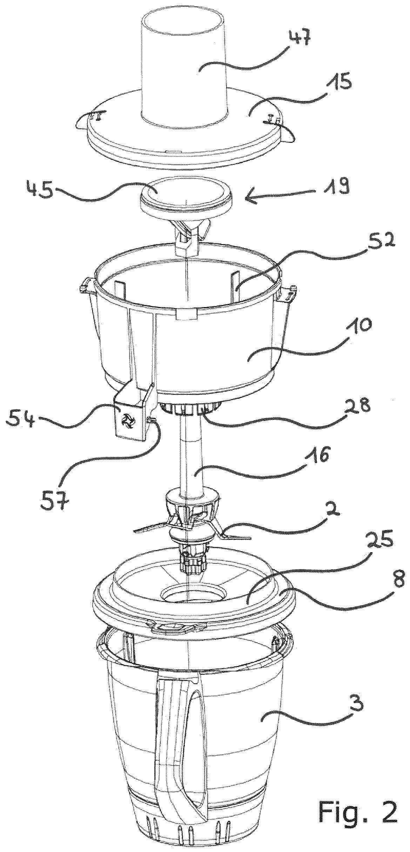

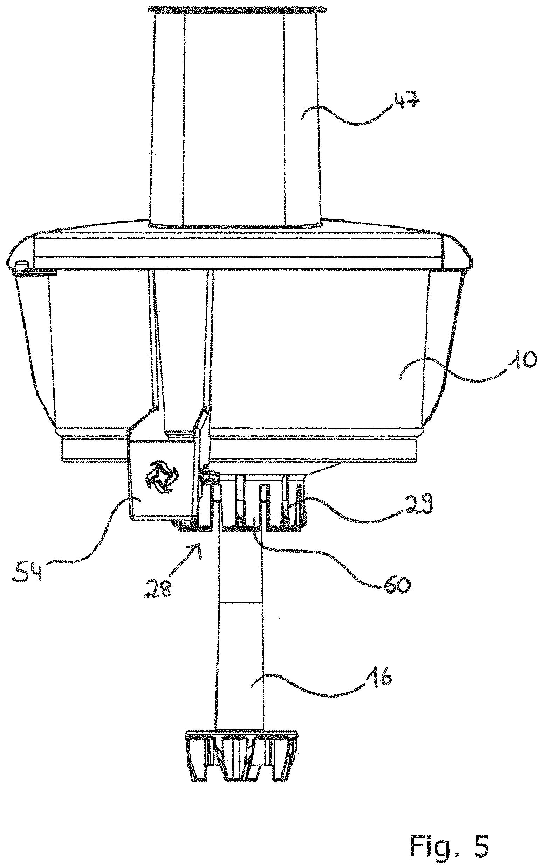

An der Unterseite 24 des Sammeltopfbodens 12 ist - in Radialrichtung R zwischen der Adapterwellen-Durchführöffnung 26 und einer äußeren Umlaufkante 27 des Sammeltopfbodens 12 - ein Befestigungskragen 28 ausgebildet, der sich ausgehend von der Unterseite 24 des Sammeltopfbodens 12 zylindrisch von der Unterseite 24 des Sammeltopfbodens 12 weg erstreckt (vgl. z. B. Fig. 1, 4, 5, 6, 8b, 9, 11). Der Befestigungskragen 28 ist in Form von einer Mehrzahl den Befestigungskragen 28 ausbildenden Befestigungsstegen 60 zusammengesetzt, die beabstandet zueinander im Kreis aufgereiht sind (vgl. Fig. 2, 5).

Der Befestigungskragen 28 ist derart ausgebildet und dimensioniert, dass dieser in dem Betriebszustands-Aufbau in die Zubereitungstopf-Einfüllöffnung 9 eingreift, wobei an dem Befestigungskragen 28 Befestigungsmittel angeordnet sind, die bei Eingriff des Befestigungskragens 28 in die Zubereitungstopf-Einfüllöffnung 9 eine Sicherung gegen eine Axialverschiebung des Sammeltopfes 10 relativ zum Zubereitungstopf 3 bereitstellen.

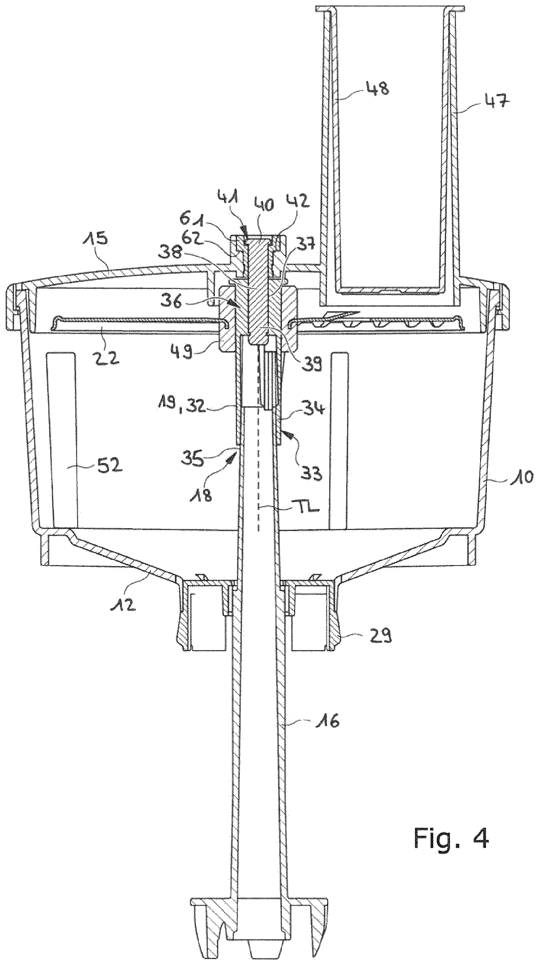

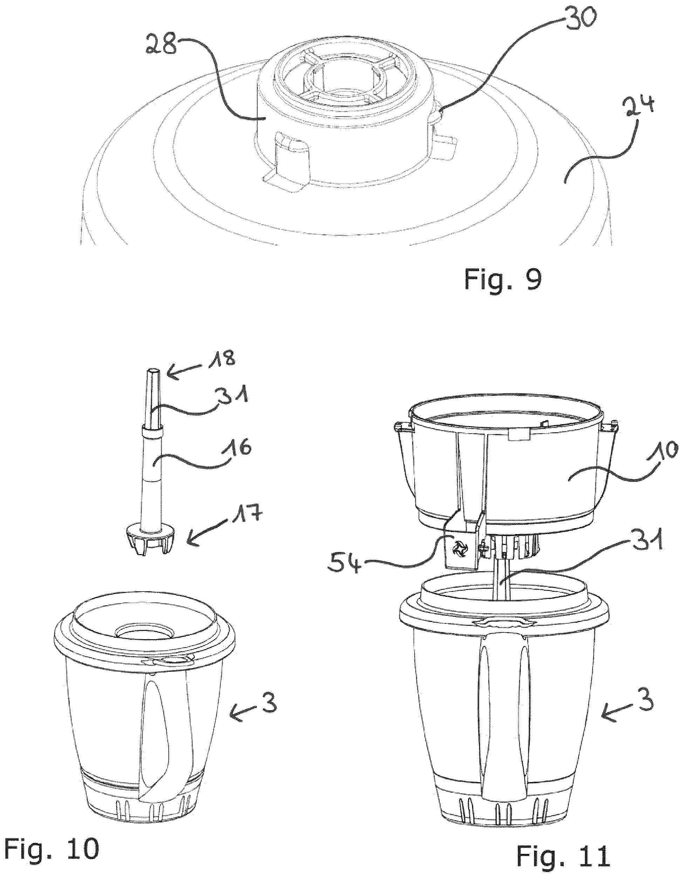

Die Befestigungsmittel sind in einer Variante (vgl. Fig. 4) mehrere an dem Befestigungskragen ausgebildete Rastnasen 29, die bei Eingriff des Befestigungskragens 28 in die Zubereitungstopf-Einfüllöffnung 9 mit dem Zubereitungstopfdeckel verrasten. In einer weiteren Variante (Fig. 9) sind die Befestigungsmittel Mittel 30 zur Bereitstellung von Bajonette-Verschlussverbindungen, die bei Eingriff des Befestigungskragens 28 in die Zubereitungstopf-Einfüllöffnung 9 mit dem Zubereitungstopfdeckel 8 Bajonette-Verschlussverbindungen bilden. Auch können die Mittel 30 mit dem Zubereitungstopfdeckel 8 Schnappverschlüsse bereitstellen.

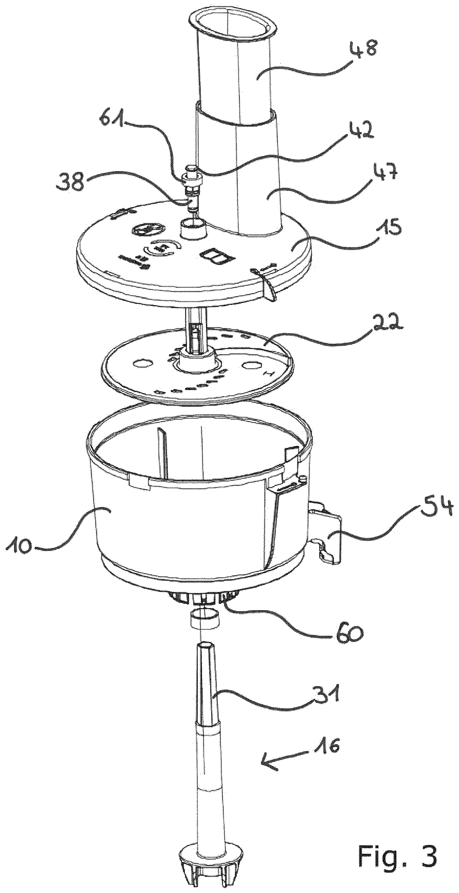

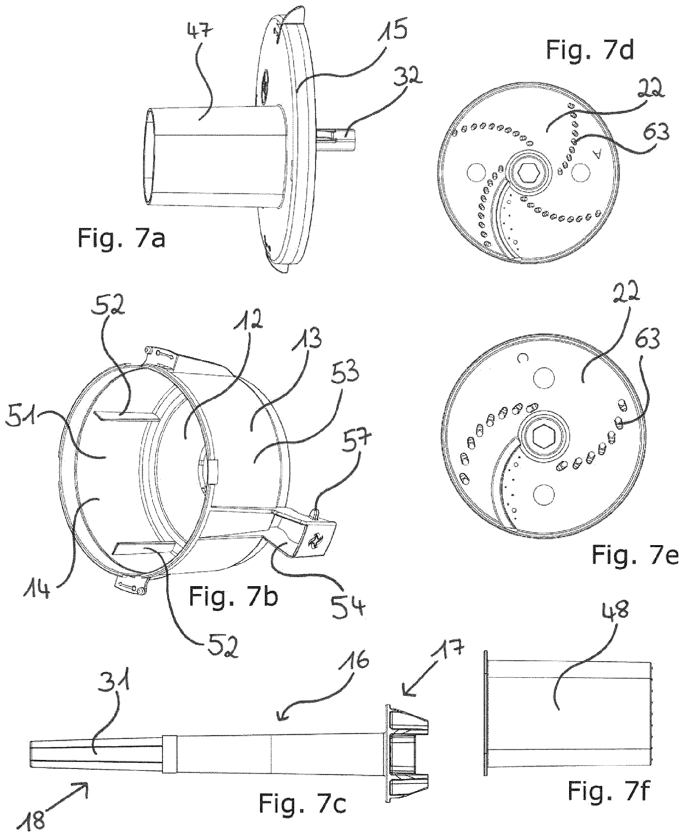

Wie in Figur 3 und 7c gezeigt, ist an dem zweiten Adapterwellen-Ende 18 in einem Konturabschnitt 31 eine polygonale (hier hexagonale) Außenkontur ausgebildet.

Die Trägerwelle 19 umfasst eine Trägerhülse 32, die an einem ersten Trägerhülsen-Ende 33 eine erste Hülsenaufnahme 34 aufweist, die das zweite Trägerwellen-Ende 21 bildet und eine polygonale (hier hexagonale) Innenkontur aufweist. In dem Betriebszustands-Aufbau greift der Konturabschnitt 31 zumindest teilweise in die erste Hülsenaufnahme 34 ein und bildet mit dieser eine kraft- und/oder formschlüssige Verbindung, wobei die Außenkontur des Konturabschnitts 31 zu der Innenkontur der ersten Hülsenaufnahme 34 korrespondiert. Die Adapterwelle 16 ist zumindest im Bereich des Konturabschnitts 31 in Richtung des zweiten Adapterwellen-Endes 18 verjüngend ausgebildet. Die Trägerhülse 32 weist im Bereich des ersten Trägerhülsen-Endes 33 einen angeschrägten Auflaufabschnitt 35 auf, der ein erleichtertes Ankoppeln des zweiten Trägerwellen-Endes 21 an das zweite Adapterwellen-Ende 18 ermöglicht.

Bei dem zweiten Ausführungsbeispiel (siehe die entsprechenden Figuren) weist die Trägerhülse 32 an einem dem ersten Trägerhülsen-Ende 33 gegenüberliegenden zweiten Trägerhülsen-Ende 36 eine zweite Hülsenaufnahme 37 auf, in die ein Lagerbolzen 38 mit einem ersten Lagerbolzenende 39 kraft-, form- und/oder stoffschlüssig eingesetzt, insbesondere eingepresst, ist, wobei der Lagerbolzen 38 mit einem dem ersten Lagerbolzenende 39 gegenüberliegenden zweiten Lagerbolzenende 40 in einer in dem Sammeltopfdeckel 15 ausgebildeten Lageraufnahme 41 in Bezug auf eine Lagerbolzen-Längsachse, die einen Teil der Trägerwellen-Längsachse TL bildet, axial-verschiebegesichert aufgenommen und um die Lagerbolzen-Längsachse bzw. die Trägerwellen-Längsachse TL drehbar gelagert ist. Wie in Figur 4 gezeigt, ist Lageraufnahme 41 durch einen Lagerring 61 verwirklicht, in welchem der Lagerbolzen 38 mit seinem zweiten Lagerbolzenende 40 aufgenommen ist. Die axiale Verschiebesicherung ist wie z. B. in Figur 4 gezeigt durch einen Hinterschnitt 42 des Lagerbolzens 38 (in Bezug zum Lagerring 61) verwirklicht. Der Lagerring 61 weist vorzugsweise ebenfalls einen Hinterschnitt 62 relativ zu einem Stützflansch im Sammeltopfdeckel 15 auf.

Bei dem ersten Ausführungsbeispiel (siehe die entsprechenden Figuren, z. B. Fig. 1) weist die Trägerhülse 32 an einem dem ersten Trägerhülsen-Ende 33 gegenüberliegenden zweiten Trägerhülsen-Ende 36 eine umlaufende Lagerkante 43 auf, die in einem in dem Sammeltopfdeckel 15 ausgebildeten Lagerschlitz 44 in Bezug auf die Trägerwellen-Längsachse TL axial-verschiebegesichert aufgenommen und um die Trägerwellen-Längsachse TL drehbar gelagert ist. Die Trägerhülse 32 weist ausgehend von der Lagerkante 43 einen sich in Richtung des ersten Trägerhülsen-Endes 33 trichterartig verjüngenden Trichterabschnitt 45 auf, wobei an einem unteren Ende des Trichterabschnitts 45 ein Aufnahmeschlitz 46 für ein Zerkleinerungswerkzeug 22 ausgebildet ist, und wobei in dem Betriebszustands-Aufbau ein Zerkleinerungswerkzeug 22 in den Aufnahmeschlitz 46 eingeschoben ist (Fig. 1). Wie in Figur 1 weiter gezeigt weist der Sammeltopfdeckel 15 einen Einfüllstutzen 47 auf, der im Betriebszustands-Aufbau in Fluchtung zu dem Trichterabschnitt 45 angeordnet ist, und über den im Betriebszustands-Aufbau, zu zerkleinernde Lebensmittel unter Einsatz eines in den Einfüllstutzen einsteckbaren Stößels 48 in Richtung des Trichterabschnitts 45 und des Zerkleinerungswerkzeugs 22 gedrückt werden können.

Bei dem zweiten Ausführungsbeispiel ist das Zerkleinerungswerkzeug 22 eine Schneidscheibe (vgl. z. B. Fig. 3), die mit einer zentriert durch die Schneidscheibe hindurchragenden Schneidscheiben-Trägerhülse 49 rotationsfest verbunden ist, wobei die Schneidscheiben-Trägerhülse 49 im Betriebszustands-Aufbau lösbar auf die Trägerhülse 32 aufgeschoben und durch an der Trägerhülse 32 angeordnete Rastmittel 50 in Bezug auf die Trägerwellen-Längsachse TL axial-verschiebegesichert ist, und wobei die Schneidscheiben-Trägerhülse 49 im auf die Trägerhülse 32 aufgeschobenen Zustand rotationsfest mit dieser verbunden ist. Dies erfolgt durch eine polygonale Innenkontur der Schneidscheiben-Trägerhülse 49 und einer polygonalen Außenkontur der Trägerhülse 32 (vgl. Fig. 7a in Verbindung mit Fig. 7d). Auch bei diesem Ausführungsbeispiel weist der Sammeltopfdeckel 15 einen Einfüllstutzen 47 auf, über den im Betriebszustands-Aufbau zu zerkleinernde Lebensmittel unter Einsatz eines in den Einfüllstutzen 47 einsteckbaren Stößels 48 in Richtung der Schneidscheibe gedrückt werden können.

Der Sammeltopfmantel 13 weist (bei beiden Ausführungsbeispielen) an seiner dem Sammeltopf-Innenraum 11 zugewandten Innenmantelfläche 51 mehrere sich zumindest teilweise in einer Richtung vom Sammeltopfboden 12 bis zur Sammeltopföffnung 14 erstreckende und in den Sammeltopf-Innenraum 11 hineinragende Stege 52 auf, wobei die Stege 52 ein ungewünschtes Aufsetzen der mit der Schneidscheibe verbundenen Schneidscheiben-Trägerhülse 49 auf das zweite Adapterwellen-Ende 18 verhindert.

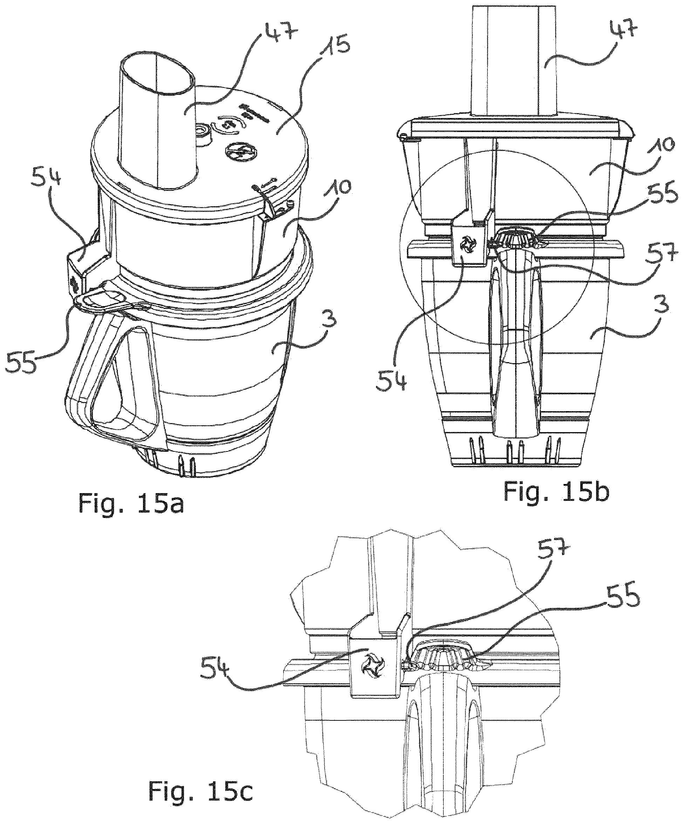

Bei beiden Ausführungsbeispielen ist an einer Außenmantelfläche 53 des Sammeltopfmantels 13 eine Verdrehsicherung angeordnet, die einen Stützflansch 54 aufweist, der sich im Betriebszustands-Aufbau an einer an dem Zubereitungstopfdeckel 8 angeordnete Lasche 55 und/oder einem Griff 56 abstützt (Figuren 15 bis 18). Damit wird eine Verdrehsicherung des Sammeltopfes 10 gegenüber dem Zubereitungstopf 3 bzw. Zubereitungstopfdeckel 8 bereitgestellt.

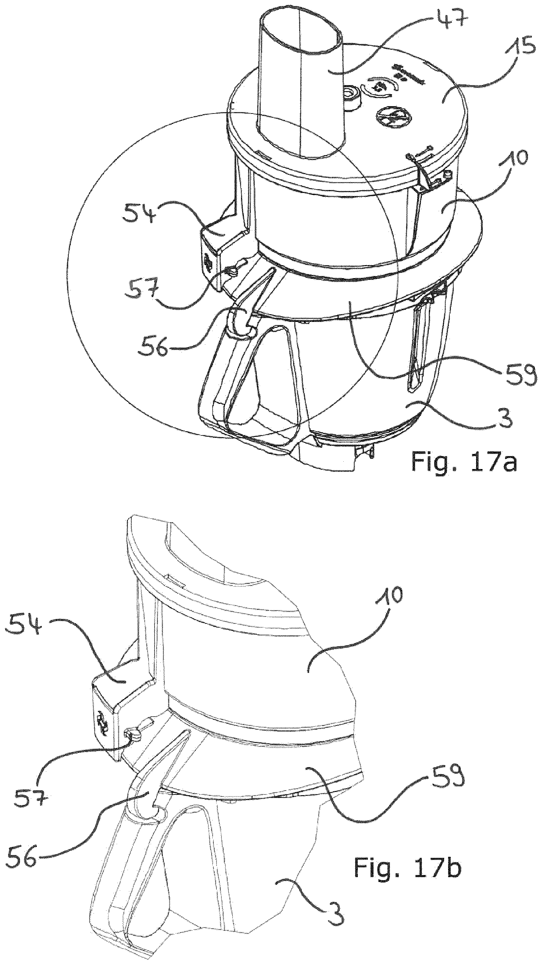

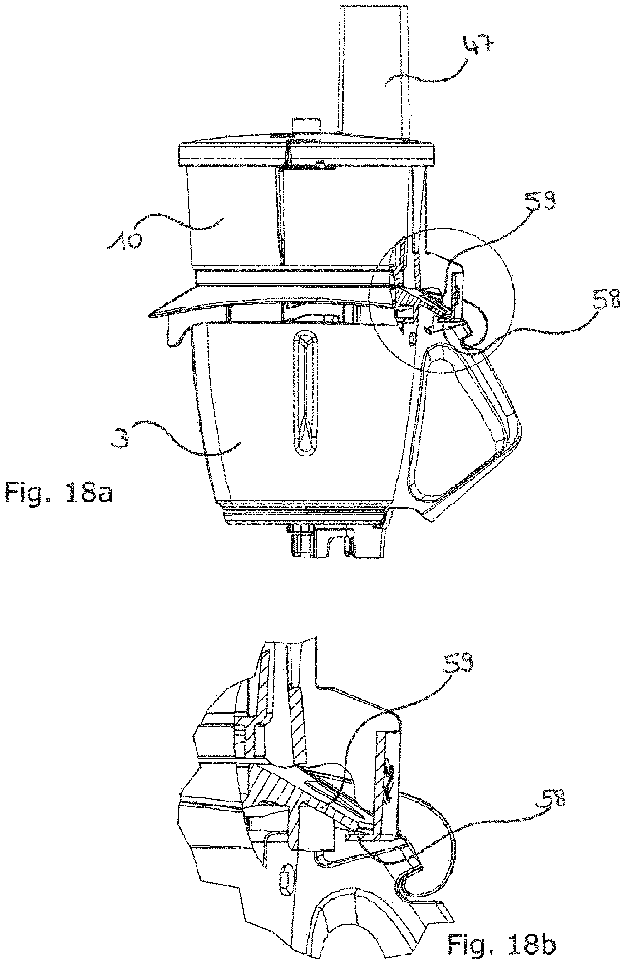

An dem Stützflansch 54 sind Nocken 57 ,58 angeordnet, die im Betriebszustands-Aufbau eine an dem Zubereitungstopfdeckel 8 angeordnete Lasche 55, 59 und/oder einen Griff 56 untergreifen oder hintergreifen. In den Figuren 17a, 17b und 18a, 18b ist dies für einen Hintergreifen der Lasche 59 durch den Nocken 58 gezeigt, in den Figuren 15 a bis c und 16a, 16b für ein Untergreifen der Lasche 55 durch den Nocken 57.

Nachfolgend seien die in den Figuren gezeigten Darstellungen der Küchenmaschinenanordnung nochmals kurz zusammengefasst und mit den zuvor beschriebenen Ausführungen in Verbindung gebracht.

Wie erwähnt zeigt Figur 1 eine teils geschnittene schematische Seitenansicht einer Küchenmaschinenanordnung nach dem ersten Ausführungsbeispiel der Erfindung, bei der eine Küchenmaschinenbaugruppe und eine Zerkleinerungsbaugruppe zu einem Betriebszustands-Aufbau zusammengebaut sind. Die einzelnen Merkmale dieser Darstellung wurden bereits ausführlich erläutert. Figur 2 zeigt eine perspektivische Explosionsdarstellung einer Küchenmaschinenanordnung nach dem ersten Ausführungsbeispiel der Erfindung.

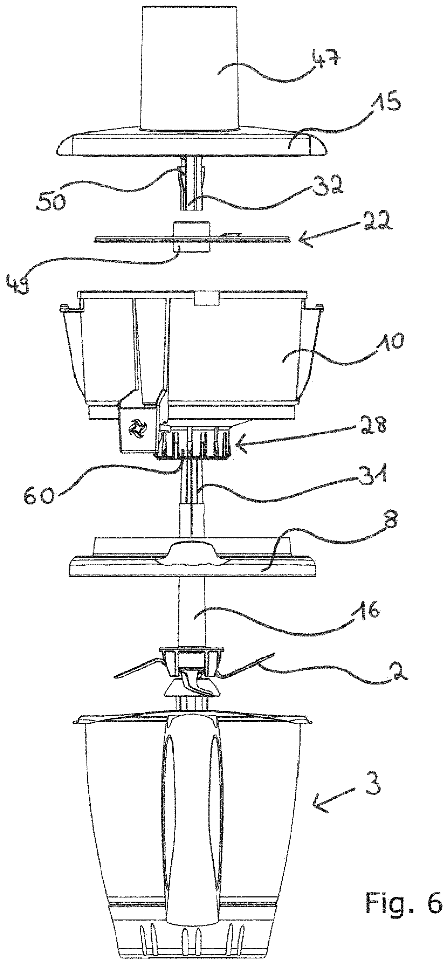

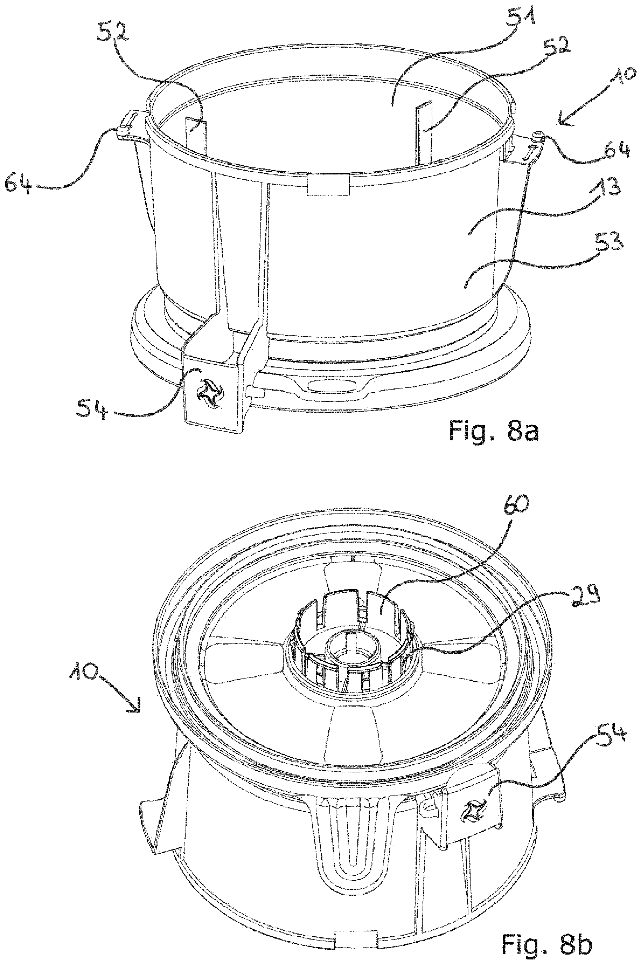

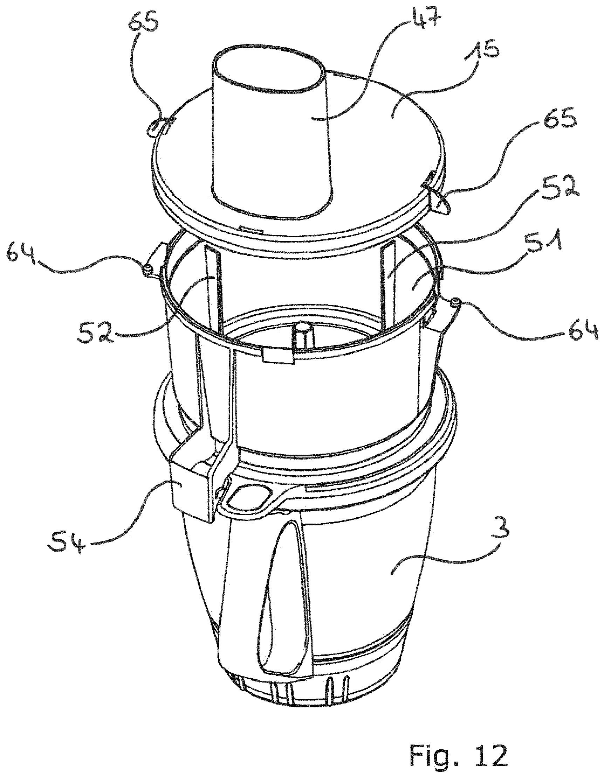

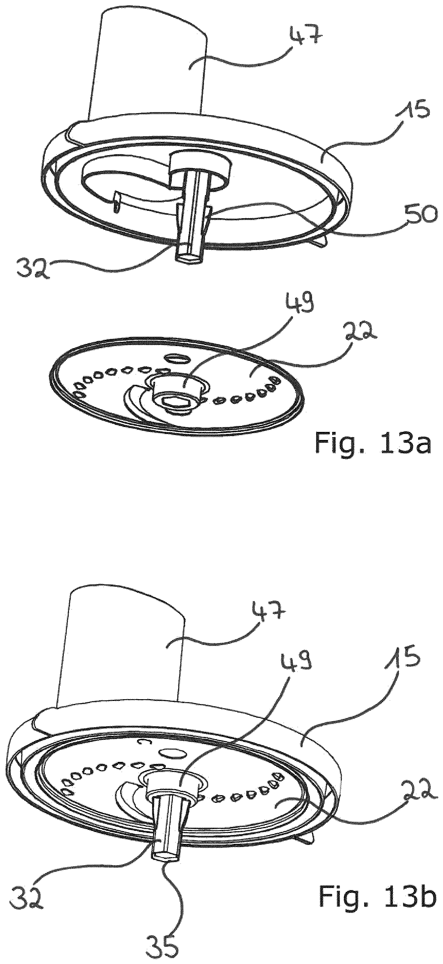

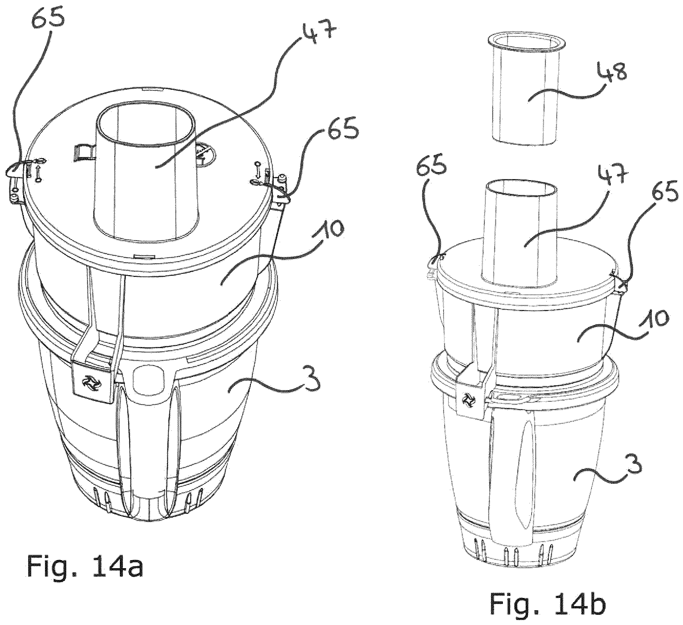

Fig. 3 zeigt eine perspektivische Explosionsdarstellung der Zerkleinerungsbaugruppe für eine Küchenmaschinenanordnung nach dem zweiten Ausführungsbeispiel der Erfindung. Das Zerkleinerungswerkzeug 22 ist im Gegensatz zum ersten Ausführungsbeispiel als Schneidscheibe ausgebildet. Auch ist der Einfüllstutzen 47 im Vergleich zum ersten Ausführungsbeispiel an einer anderen Stelle des Sammeltopfdeckels 15 angeordnet. Fig. 4 zeigt die Zerkleinerungsbaugruppe nach Fig. 3 (also nach dem zweiten Ausführungsbeispiel) in teils geschnittener schematischer Seitenansicht, allerdings in einem assemblierten Zustand der Komponenten der Zerkleinerungsbaugruppe. Die Fig. 5 zeigt die assemblierte die Zerkleinerungsbaugruppe aus Fig. 4 in einer ungeschnittenen Seitenansicht. Die Fig. 6 zeigt eine Explosionsdarstellung der Küchenmaschinenanordnung nach dem zweiten Ausführungsbeispiel. Fig. 7a zeigt eine Ansicht eines Sammeltopfdeckels 15 einer Zerkleinerungsbaugruppe, die Bestandteil einer Küchenmaschinenanordnung nach dem zweiten Ausführungsbeispiel der Erfindung ist. Zu erkennen ist der Einfüllstutzen 47 wie auch die Trägerhülse 32 mit ihrer polygonalen Außenkontur. Fig. 7b zeigt eine Ansicht eines Sammeltopfes 10 einer Zerkleinerungsbaugruppe, die Bestandteil einer Küchenmaschinenanordnung nach dem ersten und zweiten Ausführungsbeispiel der Erfindung ist. Markant zu erkennen sind insbesondere die Stege 52 und der Stützflansch 54 samt Nicken 57. Fig. 7c zeigt eine Ansicht einer Adapterwelle 16 einer Zerkleinerungsbaugruppe, die Bestandteil einer Küchenmaschinenanordnung nach dem ersten und zweiten Ausführungsbeispiel der Erfindung ist. Markant zu erkennen ist der im Bereich des zweiten Adapterwellen-Endes 18 auslaufende Konturabschnitt 31 mit polygonaler Außenkontur, sowie die sich in Richtung des zweiten Adapterwellen-Endes 18 verjüngende Querschnittsform der Adapterwelle 16. In den Fig. 7d und 7e sind Ansichten von in Form von Schneidscheiben ausgebildeten Zerkleinerungswerkzeugen einer Zerkleinerungsbaugruppe gezeigt, die Bestandteil einer Küchenmaschinenanordnung nach dem zweiten Ausführungsbeispiel der Erfindung ist. Die Schneidscheiben können unterschiedliche Muster (je nach Bedarf) von Schneidkanten 63 aufweisen. An den Schneidkanten sind in der Regel Öffnungen ausgebildet, durch die das Zerkleinerungsgut in Richtung des Sammeltopfes 10 fallen kann. Fig. 7f zeigt eine Ansicht eines Stößels 48, der in beiden Ausführungsbeispielen zum Einsatz kommt. Die Fig. 8a zeigt eine perspektivische Ansicht eines Sammeltopfes 10 einer Zerkleinerungsbaugruppe, die Bestandteil einer Küchenmaschinenanordnung nach dem ersten und zweiten Ausführungsbeispiel der Erfindung ist. Markant zu erkennen sind Anschlagelemente 64, die wie in Figur 14b und 15a gezeigt als Anschlagpunkte für an dem Sammeltopfdeckel 15 ausgebildete Anlageflügel 65 dienen. Diese tragen zu einer Verdrehsicherung des Sammeltopfdeckels 15 gegenüber dem Sammeltopf 10 bei. Die Fig. 8b zeigt eine perspektivische Ansicht des Sammeltopfes 10 nach Figur 8a von seiner Unterseite samt den daran angeordneten Befestigungskragen 28 und den zugehörigen Befestigungsstegen 60. Fig. 9 zeigt eine Ansicht einer alternativen Ausgestaltung des in Figur 8b gezeigten Befestigungskragens 28. In diesem Beispiel ist der Befestigungskragen 28 zylinderförmig durchgängig gearbeitet, nicht jedoch in Form von aufgereihten Befestigungsstegen 60. Fig. 10 zeigt eine perspektivische Ansicht des Einsetzens der Adapterwelle 16 in einen Zubereitungstopf 3 bei einer Küchenmaschinenanordnung nach dem ersten und zweiten Ausführungsbeispiel der Erfindung. Fig. 11 zeigt eine perspektivische Ansicht des Aufsetzens des Sammeltopfes 10 auf den Zubereitungstopf 3 bei einer Küchenmaschinenanordnung nach dem ersten und zweiten Ausführungsbeispiel der Erfindung. Fig. 12zeigt eine perspektivische Ansicht einer Anordnung aus Zubereitungstopf 3, eingesetzter Adapterwelle 16, auf den Zubereitungstopf 3 aufgesetztem Sammeltopf 10, und Sammeltopfdeckel 15 bei einer Küchenmaschinenanordnung nach dem zweiten Ausführungsbeispiel der Erfindung. Fig. 13a zeigt Sammeltopfdeckel 15 und Zerkleinerungswerkzeug 22 einer Zerkleinerungsbaugruppe, die Bestandteil einer Küchenmaschinenanordnung nach dem zweiten Ausführungsbeispiel der Erfindung ist. Hier ist das Zerkleinerungswerkzeug 22 als Schneidscheibe ausgebildet. Fig. 13bzeigt den Sammeltopfdeckel 15 und das Zerkleinerungswerkzeug 22 aus Fig. 13a im zusammengebauten Zustand. Fig. 14a zeigt eine perspektivische Ansicht einer Küchenmaschinenanordnung nach dem zweiten Ausführungsbeispiel der Erfindung, jedoch ohne Stößel 48, während dieser in Fig. 14b gezeigt ist.

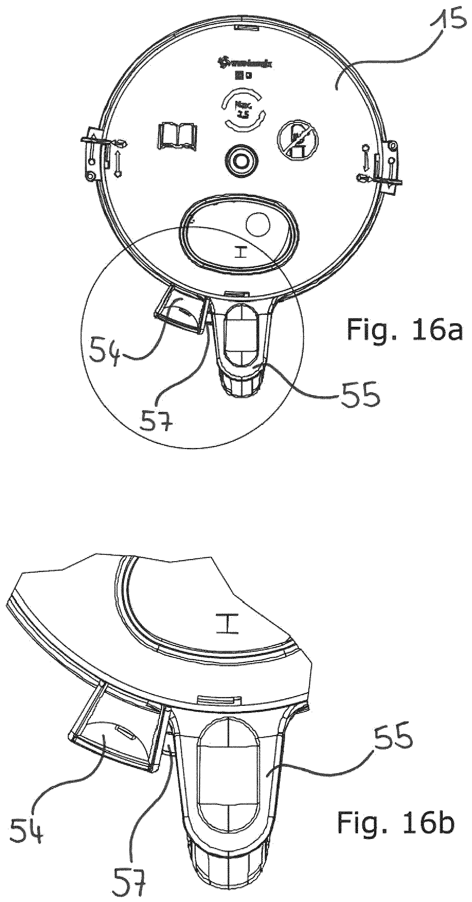

Fig. 15a zeigt eine perspektivische Ansicht einer Küchenmaschinenanordnung nach dem zweiten Ausführungsbeispiel der Erfindung. Fig. 15b zeigt eine Seitenansicht der Küchenmaschinenanordnung nach Fig. 15a, während Fig. 15c eine vergrößerte Darstellung einer Einzelheit aus Fig. 15b zeigt. In diesen Figuren ist die Abstützung des Stützflansches 54 an der Lasche 55 markant zu erkennen. Dies ist ebenfalls in den Figuren 16a und 16b deutlich zu erkennen.

Die Figuren 17a,b und 18a,b zeigen eine perspektivische Ansicht einer Küchenmaschinenanordnung nach dem zweiten Ausführungsbeispiel der Erfindung, wobei hier ein Hintergreifen des Nockens 58 in Bezug zur Lasche 59 des Zubereitungstopfdeckels 8 gezeigt ist. In Verbindung mit dem Stützflansch 54 bildet der Nocken 58 eine Axialsicherung und Verdrehsicherung aus.

Die Verdreh- und Axialsicherung des Sammeltopfes 10 in Bezug zum Zubereitungstopf kann bei beiden Ausführungsbeispielen analog ausgebildet sein.

### Bezugszeichenliste

- 1: Antriebseinheit
- 2: Rotationseinheit
- 3: Zubereitungstopf
- 4: Zubereitungstopf-Innenraum
- 5: Zubereitungstopfboden
- 6: Zubereitungstopfmantel
- 7: Zubereitungstopföffnung
- 8: Zubereitungstopfdeckel
- 9: Zubereitungstopf-Einfüllöffnung
- 10: Sammeltopf
- 11: Sammeltopf-Innenraum
- 12: Sammeltopfboden
- 13: Sammeltopfmantel
- 14: Sammeltopföffnung
- 15: Sammeltopfdeckel
- 16: Adapterwelle
- 17: erstes Adapterwellen-Ende
- 18: zweites Adapterwellen-Ende
- 19: Trägerwelle
- 20: erstes Trägerwellen-Ende
- 21: zweites Trägerwellen-Ende
- 22: Zerkleinerungswerkzeug
- 23: Sammeltopf-Kragen
- 24: Unterseite
- 25: Zubereitungstopfdeckel-Kragen
- 26: Adapterwellen-Durchführöffnung
- 27: äußere Umlaufkante
- 28: Befestigungskragen
- 29: Rastnase
- 30: Mittel
- 31: Konturabschnitt
- 32: Trägerhülse
- 33: erstes Trägerhülsen-Ende
- 34: erste Hülsenaufnahme
- 35: Auflaufabschnitt
- 36: zweites Trägerhülsen-Ende
- 37: zweite Hülsenaufnahme
- 38: Lagerbolzen
- 39: erstes Lagerbolzenende
- 40: zweiten Lagerbolzenende
- 41: Lageraufnahme
- 42: Hinterschnitt
- 43: Lagerkante
- 44: Lagerschlitz
- 45: Trichterabschnitt
- 46: Aufnahmeschlitz
- 47: Einfüllstutzen
- 48: Stößel
- 49: Schneidscheiben-Trägerhülse
- 50: Rastmittel
- 51: Innenmantelfläche
- 52: Steg
- 53: Außenmantelfläche
- 54: Stützflansch
- 55: Lasche
- 56: Griff
- 57: Nocken
- 58: Nocken
- 59: Lasche
- 60: Befestigungssteg
- 61: Lagerring
- 62: Hinterschnitt
- 63: Schneidkante
- 64: Anschlagelemente
- 65: Anlageflügel
- TL: Trägerwellen-Längsachse
- R: Radialrichtung

## Patentansprüche

1. Küchenmaschinenanordnung, umfassend eine Küchenmaschinenbaugruppe und eine Zerkleinerungsbaugruppe, wobei zur Bereitstellung eines Zerkleinerungs-Betriebszustandes der Küchenmaschinenanordnung zum Zerkleinern von Lebensmitteln wie Gemüse und/oder Obst, die Zerkleinerungsbaugruppe und die Küchenmaschinenbaugruppe zu einem Betriebszustands-Aufbau zusammengebaut sind,
wobei die Küchenmaschinenbaugruppe umfasst:
a. eine Antriebseinheit (1);
b. eine rotierbar gelagerte Rotationseinheit (2), die im Betriebszustands-Aufbau unter Einsatz der Antriebseinheit (1) rotierbar ist;
wobei die Zerkleinerungsbaugruppe umfasst:
c. einen Sammeltopf (10) zum Sammeln von zerkleinerten Lebensmitteln, wobei der Sammeltopf (10) einen Sammeltopf-Innenraum (11) aufweist, der nach außen begrenzt ist durch einen Sammeltopfboden (12) und einen Sammeltopfmantel (13), wobei in dem Betriebszustands-Aufbau eine dem Sammeltopfboden (12) gegenüberliegende Sammeltopföffnung (14) mit einem Sammeltopfdeckel (15) abgedeckt ist;
d. eine Adapterwelle (16), die im Betriebszustands-Aufbau mit einem ersten Adapterwellen-Ende (17) an die Rotationseinheit (2) angekoppelt ist, sodass sich eine Rotation der Rotationseinheit (2) unmittelbar auf die Adapterwelle (16) überträgt, wobei sich die Adapterwelle (16) im Betriebszustands-Aufbau mit einem dem ersten Adapterwellen-Ende (17) gegenüberliegenden zweiten Adapterwellen-Ende (18) bis in den Sammeltopf-Innenraum (11) hinein erstreckt,
e. eine zur Adapterwelle (16) separate Trägerwelle (19), die mit einem ersten Trägerwellen-Ende (20) in dem Sammeltopfdeckel (15) in Bezug auf eine Trägerwellen-Längsachse (TL) axial-verschiebegesichert aufgenommen und um die Trägerwellen-Längsachse (TL) drehbar gelagert ist, wobei die Trägerwelle (19) ein dem ersten Trägerwellen-Ende (20) gegenüberliegendes zweites Trägerwellen-Ende (21) aufweist, das in dem Betriebszustands-Aufbau an das zweite Adapterwellen-Ende (18) angekoppelt ist, sodass sich eine Rotation der Rotationseinheit (2) und der Adapterwelle (16) unmittelbar auf die Trägerwelle (19) überträgt;
f. ein im Betriebszustands-Aufbau von der Trägerwelle (19) getragenes und rotationsfest zu dieser angeordnetes Zerkleinerungswerkzeug (22).

2. Küchenmaschinenanordnung nach Anspruch 1, wobei die Küchenmaschinenbaugruppe einen Zubereitungstopf (3) mit einem Zubereitungstopf-Innenraum (4) aufweist, der nach außen begrenzt ist durch einen Zubereitungstopfboden (5) und einen Zubereitungstopfmantel (6), wobei in dem Betriebszustands-Aufbau eine dem Zubereitungstopfboden (5) gegenüberliegende Zubereitungstopföffnung (7) mit einem Zubereitungstopfdeckel (8) abgedeckt ist, wobei der Zubereitungstopfdeckel (8) eine Zubereitungstopf-Einfüllöffnung (9) mit einem geringeren Durchmesser als die Zubereitungstopföffnung (7) aufweist, und wobei die Rotationseinheit (2) in Nähe des Zubereitungstopfbodens (5) angeordnet ist.

3. Küchenmaschinenanordnung nach Anspruch 2, wobei in dem Betriebszustands-Aufbau der Sammeltopf (10) auf dem Zubereitungstopfdeckel (8) des Zubereitungstopfes (3) aufgesetzt ist, insbesondere derart, dass ein an einer Unterseite (24) des Sammeltopfbodens (12) angeordneter - vorzugsweise zylindrisch ausgebildeter - Sammeltopf-Kragen (23) auf dem Zubereitungstopfdeckel (8) aufliegt, und/oder dass die Unterseite (24) des Sammeltopfbodens (12) auf einem an dem Zubereitungstopfdeckel (8) angeordneten - vorzugsweise zylindrisch ausgebildeten - Zubereitungstopfdeckel-Kragen (25) aufliegt.

4. Küchenmaschinenanordnung nach Anspruch 2 oder 3, wobei in dem Sammeltopfboden (12) eine Adapterwellen-Durchführöffnung (26) ausgebildet ist, durch welche die Adapterwelle (16) in dem Betriebszustands-Aufbau hindurchgeführt ist, wobei die Adapterwellen-Durchführöffnung (26) in dem Betriebszustands-Aufbau in Radialrichtung (R) zentrisch zur Zubereitungstopf-Einfüllöffnung (9) angeordnet ist, und wobei die Adapterwellen-Durchführöffnung (26) einen geringeren Durchmesser als die Zubereitungstopf-Einfüllöffnung (9) aufweist.

5. Küchenmaschinenanordnung nach einem der vorangehenden Ansprüche, wobei sich die Adapterwelle (16) im Betriebszustands-Aufbau ausgehend von dem an die Rotationseinheit (2) angekoppelten ersten Adapterwellen-Ende (17) durch den Zubereitungstopf-Innenraum (4) und die Adapterwellen-Durchführöffnung (26) bis hinein in den Sammeltopf-Innenraum (11) erstreckt, wobei das zweite Adapterwellen-Ende (18) in dem Sammeltopf-Innenraum (11) endet.

6. Küchenmaschinenanordnung nach einem der vorangehenden Ansprüche, wobei an der Unterseite (24) des Sammeltopfbodens (12) - in Radialrichtung (R) zwischen der Adapterwellen-Durchführöffnung (26) und einer äußeren Umlaufkante (27) des Sammeltopfbodens (12) - ein Befestigungskragen (28) ausgebildet ist, der sich ausgehend von der Unterseite (24) des Sammeltopfbodens (12) zylindrisch von der Unterseite (24) des Sammeltopfbodens (12) weg erstreckt.

7. Küchenmaschinenanordnung nach Anspruch 6, wobei der Befestigungskragen (28) derart ausgebildet und dimensioniert ist, dass dieser in dem Betriebszustands-Aufbau in die Zubereitungstopf-Einfüllöffnung (9) eingreift, wobei an dem Befestigungskragen (28) Befestigungsmittel angeordnet sind, die bei Eingriff des Befestigungskragens (28) in die Zubereitungstopf-Einfüllöffnung (9) eine Sicherung gegen eine Axialverschiebung des Sammeltopfes (10) relativ zum Zubereitungstopf (3) bereitstellen.

8. Küchenmaschinenanordnung nach Anspruch 7, wobei die Befestigungsmittel mehrere an dem Befestigungskragen ausgebildete Rastnasen (29) sind, die bei Eingriff des Befestigungskragens (28) in die Zubereitungstopf-Einfüllöffnung (9) mit dem Zubereitungstopfdeckel verrasten, und/oder wobei die Befestigungsmittel Mittel (30) zur Bereitstellung von Bajonette-Verschlussverbindungen sind, die bei Eingriff des Befestigungskragens (28) in die Zubereitungstopf-Einfüllöffnung (9) mit dem Zubereitungstopfdeckel (8) Bajonette-Verschlussverbindungen bilden.

9. Küchenmaschinenanordnung nach einem der vorangehenden Ansprüche, wobei an dem zweiten Adapterwellen-Ende (18) in einem Konturabschnitt (31) eine polygonale, insbesondere hexagonale, Außenkontur ausgebildet ist.

10. Küchenmaschinenanordnung nach einem der vorangehenden Ansprüche, wobei die Trägerwelle (19) eine Trägerhülse (32) umfasst, die an einem ersten Trägerhülsen-Ende (33) eine erste Hülsenaufnahme (34) aufweist, die das zweite Trägerwellen-Ende (21) bildet und eine polygonale, insbesondere hexagonale, Innenkontur aufweist.

11. Küchenmaschinenanordnung nach Anspruch 10, wobei in dem Betriebszustands-Aufbau der Konturabschnitt (31) zumindest teilweise in die erste Hülsenaufnahme (34) eingreift und mit dieser eine kraft- und/oder formschlüssige Verbindung bildet, wobei die Außenkontur des Konturabschnitts (31) zu der Innenkontur der ersten Hülsenaufnahme (34) korrespondiert.

12. Küchenmaschinenanordnung nach einem der vorangehenden Ansprüche, wobei die Adapterwelle (16) zumindest im Bereich des Konturabschnitts (31) in Richtung des zweiten Adapterwellen-Endes (18) verjüngend ausgebildet ist.

13. Küchenmaschinenanordnung nach einem der vorangehenden Ansprüche, wobei die Trägerhülse (32) im Bereich des ersten Trägerhülsen-Endes (33) einen angeschrägten Auflaufabschnitt (35) aufweist, der ein erleichtertes Ankoppeln des zweiten Trägerwellen-Endes (21) an das zweite Adapterwellen-Ende (18) ermöglicht.

14. Küchenmaschinenanordnung nach einem der vorangehenden Ansprüche, wobei die Trägerhülse (32) an einem dem ersten Trägerhülsen-Ende (33) gegenüberliegenden zweiten Trägerhülsen-Ende (36) eine zweite Hülsenaufnahme (37) aufweist, in die ein Lagerbolzen (38) mit einem ersten Lagerbolzenende (39) kraft-, form- und/oder stoffschlüssig eingesetzt, insbesondere eingepresst, ist, wobei der Lagerbolzen (38) mit einem dem ersten Lagerbolzenende (39) gegenüberliegenden zweiten Lagerbolzenende (40) in einer in dem Sammeltopfdeckel (15) ausgebildeten Lageraufnahme (41) in Bezug auf eine Lagerbolzen-Längsachse, die einen Teil der Trägerwellen-Längsachse (TL) bildet, axial-verschiebegesichert aufgenommen und um die Lagerbolzen-Längsachse bzw. die Trägerwellen-Längsachse (TL) drehbar gelagert ist.

15. Küchenmaschinenanordnung nach einem der vorangehenden Ansprüche, wobei das Zerkleinerungswerkzeug (22) eine Schneidscheibe ist, die mit einer zentriert durch die Schneidscheibe hindurchragenden Schneidscheiben-Trägerhülse (49) rotationsfest verbunden ist, wobei die Schneidscheiben-Trägerhülse (49) im Betriebszustands-Aufbau lösbar auf die Trägerhülse (32) aufgeschoben und durch an der Trägerhülse (32) angeordnete Rastmittel (50) in Bezug auf die Trägerwellen-Längsachse (TL) axial-verschiebegesichert ist, und wobei die Schneidscheiben-Trägerhülse (49) im auf die Trägerhülse (49) aufgeschobenen Zustand rotationsfest mit dieser verbunden ist.

16. Küchenmaschinenanordnung nach einem der vorangehenden Ansprüche, wobei der Sammeltopfdeckel (15) einen Einfüllstutzen (47) aufweist, über den im Betriebszustands-Aufbau zu zerkleinernde Lebensmittel unter Einsatz eines in den Einfüllstutzen (47) einsteckbaren Stößels (48) in Richtung der Schneidscheibe gedrückt werden können.

17. Küchenmaschinenanordnung nach einem der vorangehenden Ansprüche, wobei der Sammeltopfmantel (13) an seiner dem Sammeltopf-Innenraum (11) zugewandten Innenmantelfläche (51) einen oder mehrere sich zumindest teilweise in einer Richtung vom Sammeltopfboden (12) bis zur Sammeltopföffnung (14) erstreckende(n) und in den Sammeltopf-Innenraum (11) hineinragenden Steg(e) (52) aufweist, wobei der/die Steg(e) (52) ein ungewünschtes Aufsetzen der mit der Schneidscheibe verbundenen Schneidscheiben-Trägerhülse (49) auf das zweite Adapterwellen-Ende (18) verhindert.

18. Küchenmaschinenanordnung nach einem der Ansprüche 1 bis 13, wobei die Trägerhülse (32) an einem dem ersten Trägerhülsen-Ende (33) gegenüberliegenden zweiten Trägerhülsen-Ende (36) eine umlaufende Lagerkante (43) aufweist, die in einem in dem Sammeltopfdeckel (15) ausgebildeten Lagerschlitz (44) in Bezug auf die Trägerwellen-Längsachse (TL) axial-verschiebegesichert aufgenommen und um die Trägerwellen-Längsachse (TL) drehbar gelagert ist.

19. Küchenmaschinenanordnung nach Anspruch 18, wobei die Trägerhülse (32) ausgehend von der Lagerkante (43) einen sich in Richtung des ersten Trägerhülsen-Endes (33) trichterartig verjüngenden Trichterabschnitt (45) aufweist, wobei an einem unteren Ende des Trichterabschnitts (45) ein Aufnahmeschlitz (46) für ein Zerkleinerungswerkzeug (22) ausgebildet ist, und wobei in dem Betriebszustands-Aufbau ein Zerkleinerungswerkzeug (22) in den Aufnahmeschlitz eingeschoben ist.

20. Küchenmaschinenanordnung nach Anspruch 19, wobei der Sammeltopfdeckel einen Einfüllstutzen (47) aufweist, der im Betriebszustands-Aufbau in Fluchtung zu dem Trichterabschnitt (45) angeordnet ist, und über den im Betriebszustands-Aufbau, zu zerkleinernde Lebensmittel unter Einsatz eines in den Einfüllstutzen (45) einsteckbaren Stößels (48) in Richtung des Trichterabschnitts (45) und des Zerkleinerungswerkzeugs (22) gedrückt werden können.

21. Küchenmaschinenanordnung nach einem der Ansprüche 2 bis 20, wobei an einer Außenmantelfläche (53) des Sammeltopfmantels (13) eine Verdrehsicherung angeordnet ist, die einen Stützflansch (54) aufweist, der sich im Betriebszustands-Aufbau an einer an dem Zubereitungstopfdeckel (8) angeordneten Lasche (55, 59) und/oder einem Griff (56) abstützt.

22. Küchenmaschinenanordnung nach Anspruch 21, wobei an dem Stützflansch (54) ein oder mehrere Nocken (57, 58) angeordnet sind, der/die im Betriebszustands-Aufbau eine an dem Zubereitungstopfdeckel (8) angeordnete Lasche (55, 59) und/oder eine Griff (56) untergreifen oder hintergreifen.

23. Zerkleinerungsbaugruppe für eine nach einem der Ansprüche 1 bis 22 ausgebildete Küchenmaschinenanordnung, wobei die Zerkleinerungsbaugruppe zur Bereitstellung eines Zerkleinerungs-Betriebszustandes der Küchenmaschinenanordnung zum Zerkleinern von Lebensmitteln wie Gemüse und/oder Obst, dazu ausgebildet ist, mit der Küchenmaschinenbaugruppe zu einem Betriebszustands-Aufbau zusammengebaut zu werden,
die Zerkleinerungsbaugruppe umfassend:
a. einen Sammeltopf (10) zum Sammeln von zerkleinerten Lebensmitteln, wobei der Sammeltopf (10) einen Sammeltopfboden (12), einen Sammeltopfmantel (13) und einen Sammeltopfdeckel (15) umfasst, wobei der Sammeltopf (10) einen Sammeltopf-Innenraum (11) aufweist, der nach außen begrenzt ist durch den Sammeltopfboden (12) und den Sammeltopfmantel (13), wobei eine dem Sammeltopfboden (12) gegenüberliegende Sammeltopföffnung (14) mit einem Sammeltopfdeckel (15) abdeckbar ist;
b. eine Adapterwelle (16), die mit einem ersten Adapterwellen-Ende (17) an eine Rotationseinheit (2) der Küchenmaschinenbaugruppe ankoppelbar ist, sodass eine durch eine Antriebseinheit (1) der Küchenmaschinenbraugruppe bewirkte Rotation der Rotationseinheit (2) unmittelbar auf die Adapterwelle (16) übertragbar ist, wobei die Adapterwelle (16) dazu ausgebildet ist, dass sich die Adapterwelle (16) in dem Betriebszustands-Aufbau mit einem dem ersten Adapterwellen-Ende (17) gegenüberliegenden zweiten Adapterwellen-Ende (18) bis in den Sammeltopf-Innenraum (11) hinein erstreckt,
c. eine zur Adapterwelle (16) separate Trägerwelle (19), die mit einem ersten Trägerwellen-Ende (20) in dem Sammeltopfdeckel (15) in Bezug auf eine Trägerwellen-Längsachse (TL) axial-verschiebegesichert aufgenommen und um die Trägerwellen-Längsachse (TL) drehbar gelagert ist, wobei die Trägerwelle (19) ein dem ersten Trägerwellen-Ende (20) gegenüberliegendes zweites Trägerwellen-Ende (21) aufweist, mit dem die Trägerwelle (19) an das zweite Adapterwellen-Ende (18) ankoppelbar ist, sodass eine Rotation der Rotationseinheit (2) und der Adapterwelle (16) unmittelbar auf die Trägerwelle (19) übertragbar ist;
d. ein von der Trägerwelle (19) tragbares und rotationsfest zu dieser anordenbares Zerkleinerungswerkzeug (22).
